Europäisches Patentamt

European Patent Office

Office européen des brevets

(19)

(11) Publication number: **0 130 667 B1**

(12) **EUROPEAN PATENT SPECIFICATION**

(45) Date of publication of patent specification: 05.06.91

(51) Int. Cl.5: **H04N 5/782**, H04N 9/80, H04N 5/92, H04N 9/82, H04N 5/783, G11B 5/592

(21) Application number: 84302745.9

(22) Date of filing: 24.04.84

(54) **Apparatus for recording and reproducing a video signal obtained from a high speed scanning video camera.**

(30) Priority: 22.04.83 JP 71280/83
22.04.83 JP 71281/83
22.04.83 JP 71282/83

(43) Date of publication of application:
09.01.85 Bulletin 85/02

(45) Publication of the grant of the patent:
05.06.91 Bulletin 91/23

(84) Designated Contracting States:
AT DE FR GB NL

(56) References cited:
EP-A- 0 120 696
DE-A- 3 221 666
US-A- 4 222 078
US-A- 4 280 151
US-A- 4 339 775

NHK TECHNICAL MONOGRAPH, no. 31,
March 1982, pages 3-26, Winterthur, CH; K.
YOKOYAMA et al.: "Digital videotape record-
er"

(73) Proprietor: SONY CORPORATION
7-35 Kitashinagawa 6-Chome Shinagawa-ku
Tokyo 141(JP)

(72) Inventor: Ninomiya, Takeshi
Sony Corporation 7-35 Kitashinagawa
6-chome
Shinagawa-ku Tokyo(JP)
Inventor: Suzuki, Hideto
Sony Corporation 7-35 Kitashinagawa
6-chome
Shinagawa-ku Tokyo(JP)

(74) Representative: Cotter, Ivan John et al
D. YOUNG & CO. 10 Staple Inn
London WC1V 7RD(GB)

**Description**

This invention relates to apparatus for recording and reproducing a video signal obtained from a high speed scanning video camera.

It is known to use a high speed film camera as an apparatus for picking up and recording a phenomenon moving at high speed. The high speed film is however subject to the defect that a phenomenon moving at high speed, which has been recorded by the camera, cannot be reproduced immediately. To remove the above defect, various researches and technical developments have been made in which a phenomenon moving at high speed is picked up by a television camera, recorded by a video tape recorder (VTR) or the like, and then reproduced immediately.

As is known well, it takes at least 1/60 of a second for an ordinary television camera to convert a single picture to an electrical signal. Accordingly, it is impossible for the television camera to pick up a moving object which moves so fast that its image changes at a speed greater than 1/60 of a second. To solve this problem, a technique is disclosed in, for example, the published specification of Japanese Patent Application (examined) No. 26416/1977 in which the visual field of a pickup tube is divided into a plurality of sections, the whole of an object is placed in each one of the sections and the object image on the pickup tube is scanned during a scanning period of time corresponding to each section to thereby enable a phenomenon moving at high speed to be picked up.

Further, in the published specification of Japanese Patent Application (examined) No. 13631/1980 there is disclosed a technique in which an optical image of an object is sequentially projected onto a plurality of pickup tubes having an accumulation effect at every constant interval during a constant time period, and the video signals from the respective pickup tubes are respectively supplied to a plurality of recording apparatuses to thereby successively record the time image of a phenomenon moving at high speed.

In addition, in the published specification of Japanese Patent Application (unexamined) No. 2119/1977 there is disclosed a technique in which two image pickup elements or imagers are employed and deflections thereof are mutually displaced by every 1/2 frame to thereby produce a video signal of high speed at twice the frame speed.

However, according to the technique disclosed in the published specification of Japanese Patent Application (examined) No. 26416/1977, since the visual field is substantially narrowed, only the image of the periphery of the moving object is obtained. Also, since the movable range of the moving object is confined within the one divided section, this technique is not suitable for general use. According to the technique disclosed in the published specification of Japanese Patent Application (examined) No. 13631/1980, since a plurality of image elements having an accumulation effect and a plurality of recording apparatuses are required, the arrangement thereof becomes complicated, which results in significant inconvenience in practical use. Furthermore, since the technique disclosed in the published specification of Japanese Patent Application (unexamined) No. 2119/1977 requires a plurality of image pickup elements and the recorded pattern on a magnetic tape becomes special (non-standard), the recorded tape has no compatibility.

In addition, it might be considered that a video signal picked up by a television camera at a scanning speed which is a plurality of times (N) higher than the ordinary scanning speed could be recorded as it is by using a VTR. In that case, it would be necessary to set the speed of revolution of a rotary drum of the tape guide drum at N times its standard value and to set the tape transport speed at N times its standard value. This, however, will cause the following problems.

(1) In order to rotate the rotary drum of the tape guide drum at a speed of revolution N times the standard speed of revolution, it is necessary to set both the carrier frequency of FM-modulation (frequency modulation) and the base band frequency at values N times higher than their standard values. However, in this case, although the signal recorded at a speed N times high than the standard value must be reproduced at the normal speed, it is quite difficult to secure a corresponding relationship between the emphasis and deemphasis and the characteristics of the recording and reproducing circuits with the frequency stability or the like of the frequency modulated signal frequency. In addition, the recorded tape has no compatibility.

(2) Since the frequency modulated carrier frequency becomes N times the normal value, the impedance of the rotary magnetic head, the characteristic of the rotary transformer and so on make it in fact quite difficult to increase the value N.

(3) If the speed of revolution of the rotary drum of the tape guide drum is set to N times the normal value, there is a possibility that the contact pressure of the rotary magnetic head on the magnetic tape will be lowered by a so-called air film to lower the recording sensitivity.

The applicants have previously proposed a recording apparatus, for recording a video signal obtained from a high speed scanning video camera, which can record a video signal obtained from a high speed scanning video camera by using a television camera and a video tape recorder (VTR). See the applicant's co-pending European Patent Application EP-A-0120696. Such recording apparatus, for recording a video signal obtained from a high speed scanning video camera, comprises a memory means for storing therein a video signal derived from a high speed scanning video camera having a scanning speed which is faster than the scanning speed of a standard television signal and a plurality of rotary magnetic heads supplied with video signals of a plurality of channels read out in parallel from the memory means such tha the video signals of the plurality of channels are recorded on the magnetic tape by the plurality of rotary magnetic heads so as to form adjoining slanting tracks sequentially.

According to the invention there is provided apparatus for recording on and reproducing from a magnetic recording tape a high speed video signal obtained from a high speed scanning video camera having a scanning speed which is N times (N is an integer) the scanning speed of a standard video camera that generates a standard television video signal, the apparatus being characterised by:

(a) means for driving the magnetic recording tape to run at a tape speed which is N times that of a standard recording and reproducing apparatus;

(b) means for dividing the high speed video signal into N video signals;

(c) means for expanding a time axis of each of the N video signals in the form of a time axis which is compressed with respect to that of the standard television video signal;

(d) means for modulating each of the time axis expanded video signals;

and

(e) recording and reproducing means comprising a rotary drum having N rotary magnetic heads mounted on the circumference thereof with an equal angular distance therebetween to record each of the modulated video signals on the magnetic recording tape as successive tracks and a playback head mounted on the circumference thereof at a predetermined position, the diameter of the rotary drum being in a predetermined relationship to that of the drum of the standard magnetic recording and reproducing apparatus.

A preferred embodiment of the present invention described hereinbelow provides a recording and reproducing apparatus for recording and reproducing a video signal obtained from a high speed scanning video camera, which apparatus can easily pick up, record and reproduce a phenomenon moving at high speed by using a television camera and a VTR. The preferred apparatus is compatible with a VTR of a standard type, for example the C-format of the SMPTE. Further, the preferred apparatus can record a video signal obtained from a high speed scanning video camera so that the signal can be reproduced at a tape speed sufficiently lower than the normal tape speed without causing vertical synchronising disorder and dropping of the picture. In other words, the preferred apparatus can record the video signal on the magnetic tape with the standard recording pattern and can reproduce the signal at a tape speed sufficiently lower than the normal tape speed.

The invention will now be further described, by way of illustrative and non-limiting example, with reference to the accompanying drawings, in which like references designate like elements and parts throughout, and in which:

Figure 1 is a block diagram showing a previously proposed recording apparatus for recording a video signal obtained from a high speed scanning video camera;

Figure 2 is a timing chart of write and read timings of a memory, useful for explaining the operation of the recording apparatus shown in Figure 1;

Figures 3A and 3B are plan and side views, respectively, of a tape guide drum used in the recording apparatus shown in Figure 1;

Figures 4 and 5 are respective vector diagrams useful for explaining the operation of recording apparatus shown in Figure 1;

Figure 6 is a diagram of a recorded pattern on a tape produced by the recording apparatus shown in Figure 1;

Figure 7 is a block diagram showing a main part of another previously proposed recording apparatus;

Figure 8 is a timing chart of write and read timings of a memory, useful for explaining the operation of the recording apparatus shown in Figure 7;

Figures 9A and 9B are plan and side views, respectively, of the tape guide drum used in the recording apparatus shown in Figure 1 or 7 when a rotary magnetic head for monitor playback use is provided;

Figure 10 is a block diagram showing an example of a detecting and adjusting apparatus that can be used in the recording apparatus shown in Figure 1 or 7;

Figure 11 is a connection diagram showing a bias driving circuit used for the monitor playback rotary magnetic head in the apparatus shown in Figures 9 and 10;

EP 0 130 667 B1

Figure 12 is a diagram showing a positional relationship between the tracks on the tape and the rotary magnetic head, useful for explaining the operation of the bias driving circuit shown in Figure 11;

Figure 13 is a block diagram showing a further previously proposed recording apparatus for recording a video signal obtained from a high speed scanning video camera;

Figure 14 is a timing chart of write and read timings of a memory, useful for exaplaining the operation of the recording apparatus shown in Figure 13;

Figures 15 and 16 are respective block diagrams showing yet further previously proposed recording apparatuses for recording a video signal obtained from a high speed scanning video camera;

Figure 17 is a plan view illustrating a tape guide drum used in the apparatus shown in Figure 16;

Figure 18 is a diagram used to explain an embodiment of the present invention, in which a magnetic tape is transported at a tape speed 5 times the normal tape speed for recording and is reproduced at a tape speed lower than the normal tape speed;

Figure 19 is a block diagram showing apparatus embodying the present invention for recording and reproducing a video signal obtained from a high speed scanning video camera; and

Figures 20 and 21 are a diagram and a vector diagram, respectively, useful for explaining the operation of the apparatus shown in Figure 19.

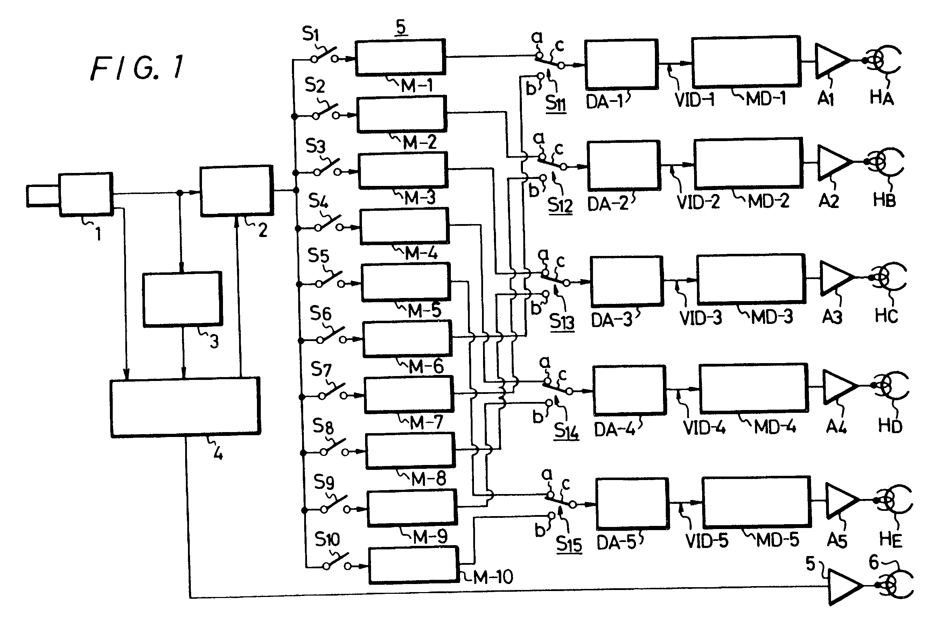

A previously proposed recording apparatus for recording a video signal obtained from a high speed scanning video camera will now be described with reference to Figure 1. This recording apparatus employs an image pickup apparatus or high speed scanning video camera having a scanning speed which is five times the scanning speed of a standard television signal of the NTSC (National Television Systems Committee) system.

If a subcarrier frequency, a horizontal frequency, a vertical frequency and a frame frequency of a video signal are respectively taken as $f'_{sc}$, $f'_H$, $f'_V$ and $f'_{FR}$, they can be expressed as follows:

$$f'_{sc} = \frac{910}{4} f'_H = 17.9 \text{ (MHz)}$$

$$f'_H = \frac{525}{2} f'_V = 78.75 \text{ (kHz)}$$

$$f'_V = 300 \text{ (Hz)}$$

$$f'_{FR} = \frac{1}{2} f'_V = 150 \text{ (Hz)}$$

In Figure 1, a reference numeral 1 designates an image pickup apparatus, video camera or imager which includes an image element such as a picture tube, a solid state image pickup element or the like and a driving means, a signal processing circuit and the like corresponding thereto. In this example, the video camera 1 also includes an encoder to produce a composite colour video signal in accordance with the NTSC system. Such encoder can, however, be provided at a signal processing circuit or system at a stage subsequent to the video camera 1, for example in a subsequent digital-to-analog (D/A) converter stage which will be described hereinbelow.

The composite colour video signal from the video camera 1 is supplied to an analog-to-digital (A/D) converter 2 and thereby digitised. A synchronising signal separating circuit 3 receives the video signal from the video camera 1 to separate therefrom various synchronising signals. A colour framing signal from the video camera 1 and horizontal and vertical synchronising signals from the synchronising signal separating circuit 3 are supplied to a clock signal generating/system control circuit 4. A clock signal with a frequency $f'_{W-CK}$ of, for example, $4f'_{sc}$ (= 71.6 MHz) from the circuit 4 is supplied to the A/D converter 2. A control signal from the circuit 4 is supplied through an amplifier 5 to a stationary or fixed magnetic head 6 thereby to be recorded along one side edge of a magnetic tape (not shown).

The digitised video signal from the A/D converter 2 is supplied through on-off switches $S_1$ to $S_{10}$ to a field memory 5 (memories M-1 to M-10) and thereby written therein with the data rate of the write frequency $f'_{W-CK}$. Digitised video signals read out from the field memories M-1, M-6; M-2, M-7; M-3, M-8; M-4, M-9; and M-5, M-10 with the date rate of a read frequency $f_{R-CK}$ (= $\frac{1}{5} f'_{W-CK}$) are respectively supplied through change-over switches $S_{11}$ to $S_{15}$ (each switch having fixed contacts a, b and a movable contact c) to digital-

4

to-analog (D/A) converters DA-1 to DA-5 and thereby converted to analog signals VID-1 to VID-5 in response to the clock signal with the read frequency $f_{R-CK}$. The analog video signals VID-1 to VID-5 from the D/A converters DA-1 to DA-5 are supplied to frequency modulators MD-1 to MD-5 and thereby frequency modulated. The frequency modulated video signals are supplied through respective amplifiers $A_1$ to $A_5$ to five rotary magnetic heads $H_A$ to $H_E$ and thereby recorded on the magnetic tape to sequentially form adjacent slanting tracks.

Each of the frequency modulators MD-1 to MD-5 includes means for adjusting the video level, carrier frequency, deviation, differential gain, differential phase, frequency characteristic and the like, by means of which the characteristics of the respective channels can be made uniform.

The previously proposed recording apparatus presently being described makes use of a television camera and a video tape recorder (VTR) of helical scan system or type. While, in this apparatus, the section from the video camera 1 to the D/A converters DA-1 to DA-5 is taken or considered as the television camera side and the section from the frequency modulators MD-1 to MD-5 ro the rotary magnetic heads $H_A$ to $H_E$ (and the amplifier 5 and the fixed magnetic head 6) is taken as the VTR side, the boundary between the television camera side and the VTR side is not limited to the above.

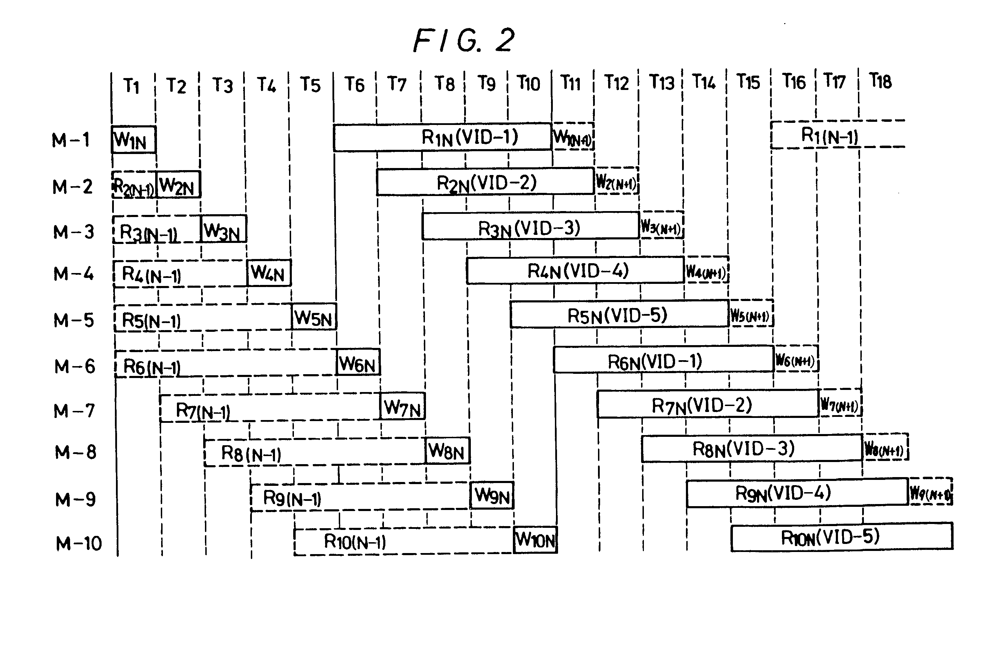

The operation of the apparatus shown in Figure 1 will now be described with reference to Figure 2. In Figure 2, references $T_1$, $T_2$, $T_3$ ...... designate field periods each having a time width or duration

$$T \left( = \frac{1}{f'_V} \right),$$

During the period $T_1$, only the switch $S_1$ is turned on to allow the digitised video signal to be written into the memory M-1. During the succeeding period $T_2$, only the switch $S_2$ is turned on to allow the video signal to be written into the memory M-2. In like manner, the image signal is sequentially written into the memories M-3 to M-10.

In the field period $T_6$, the movable contact c of the switch $S_{11}$ is connected to the fixed contact a so that a video signal $W_{1N}$ written into the memory M-1 during the field period $T_1$ starts to be read out therefrom. Since $f_{R-CK} = \frac{1}{5} f'_{W-CK}$, 5 field periods $T_6$ to $T_{10}$ are required to read the video signal $W_{1N}$ and to provide a read signal $R_{1N}$.

Similarly, in the field period $T_7$, the video signal $W_{2N}$ written into the memory M-2 during the field period $T_2$ starts to be read out. In like manner, 5 field periods $T_7$ to $T_{11}$ are required to read the video signal $W_{2N}$ and to provide a read signal $R_{2N}$. The same operation is carried out for subsequent field periods. In the field period $T_{11}$, the movable contact c of the switch $S_{11}$ is connected to the fixed contact b so that a video signal $W_{6N}$ stored in the memory M-6 starts to be read out therefrom and a read signal $\overline{R}_{6N}$ thus is obtained. Accordingly, if the written digital video signals $W_{1N}$, $W_{2N}$, ...... are controlled to occupy one field period from the beginning of each field, the read video signals $R_{1N}$, $R_{2N}$ ...... become the same as they are read out from the beginning of each field so that the D.A converters DA-1 to DA-5 generate the analog video signals VID-1 to VID-5 which are of 5 phases with a phase interval of

$$\frac{1}{f'_V} = \frac{1}{5} \cdot \frac{1}{f_V}$$

between adjacent phases.

The video signal VID-1 comprises the video signals $R_{1N} \rightarrow R_{6N} \rightarrow R_{(N+1)} \rightarrow$ ..... which are read sequentially. If, now, $W_{1N}$ is taken as the video signal of the NTSC system in the first field, $W_{2N}$ is the video signal in the second field, ......$W_{4N}$ is the video signal in the fourth field, $W_{5N}$ is the video signal in the first field, and $W_{6N}$ is the video signal in the second field ...... . Thus, the video signal VID-1 comprises the sequential video signal $R_{1N}$ (first field) $\rightarrow R_{6N}$ (second field) $\rightarrow R_{1(N+1)}$ (third field) $\rightarrow R_{6(N+1)}$ (fourth field) $\rightarrow R_{1(N+2)}$ (first field)...... . Therefore, the video signal VID-1 becomes a sequential video signal in accordance with the NTSC system; namely it has excellent colour framing properties. Similarly, the video signals VID-2 ...... VID-5 become sequential video signals in accordance with the NTSC system. Finally, the respective D/A converters produce video signals in accordance with the NTSC system with 5 phases.

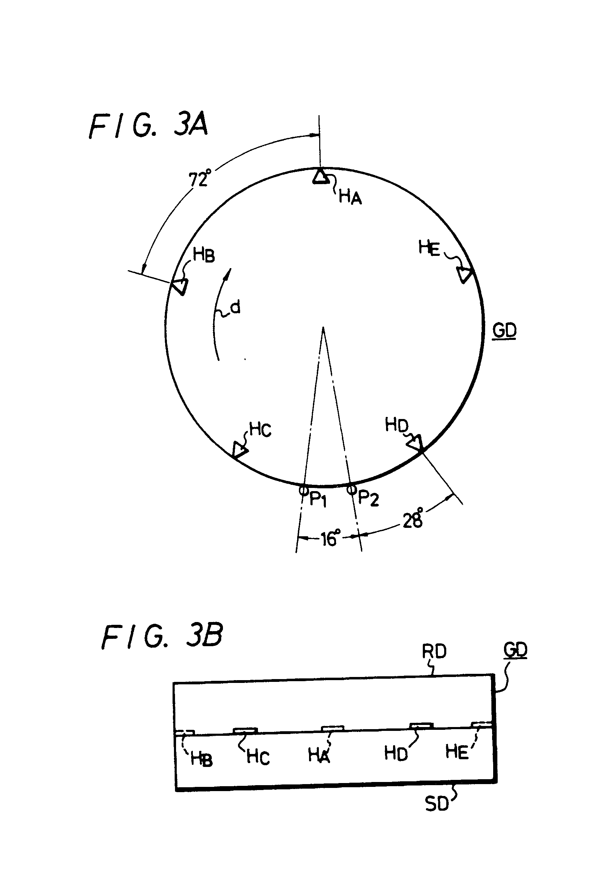

Figures 3A and 3B illustrate the arrangement of the respective rotary magnetic heads (recording heads) $H_A$ to $H_E$. As shown in Figures 3A and 3B, the five rotary magnetic heads $H_A$ to $H_E$ are mounted on a rotary drum RD of a tape guide drum GD with an angular distance of 72° between adjacent heads. The rotary drum RD is rotated once for every period of

$$\frac{1}{f_V},$$

namely at 60 Hz, in the clockwise direction. A reference SD designates a fixed drum. A record tape (not shown) is wrapped around the tape guide drum GD along its external periphery from points $P_2$ to $P_1$ in the anticlockwise direction. The tape wrapping angle is approximately $344°$ and the tape transport speed is five times the standard value vt of the normal tape transport speed.

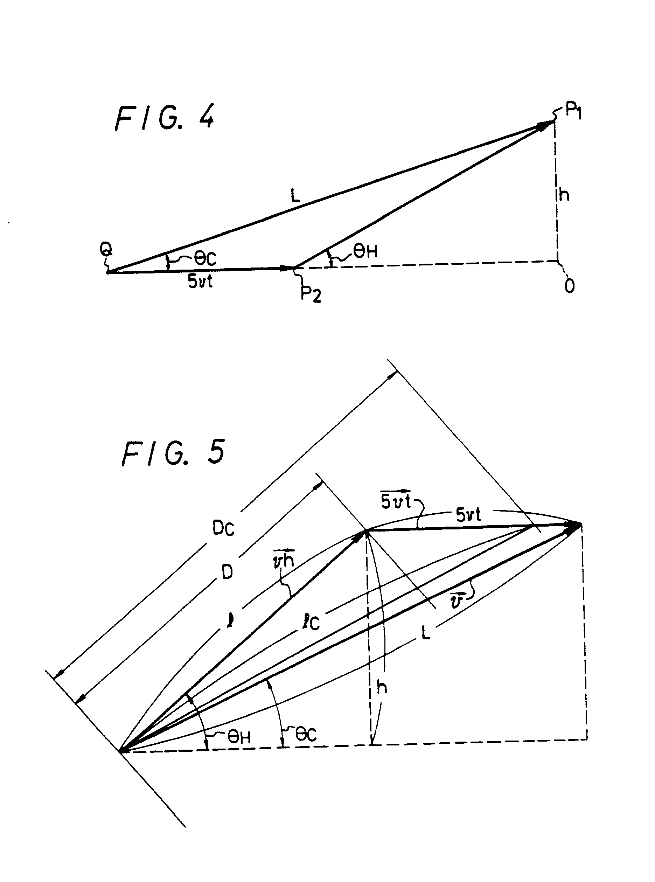

A tape recorded under the above conditions must satisfy all dimensions which are determined by the standard or normalisation. In Figure 4, a recorded track pattern vector

$$\overrightarrow{QP_1}$$

on the tape becomes the sum of a tape transport vector

$$\overrightarrow{QP_2}$$

and a drum rotation vector

$$\overrightarrow{P_2P_1}$$

as expressed in the following equations:

$$\overrightarrow{QP_1} = \overrightarrow{QP_2} + \overrightarrow{P_2P_1}$$

$$\overline{QP_1}\ \cos\theta c\ -\ \overline{P_2P_1}\ \cos\theta_H = 5vt$$

$$\overline{QP_1}\ \sin\theta c\ =\ \overline{P_2P_1}\ \sin\theta_H = h$$

s:
where $\theta c$ and $\theta_H$ represent the track angle and the helix angle, respectively.

From the above two equations,

$$\overline{P_2P_1}$$

and $\theta_H$ can be determined. By way of example, h, vt and

$$\overline{QP_1}$$

are given as h = 18.4 mm, vt = 4.07 mm/sec and

$$\overline{QP_1}$$

= 410.764 mm. Thus:

$$\overline{P_2P_1} = \sqrt{h^2 + (\overline{QP_1}\cos\theta c - 5vt)^2}$$

$$= \sqrt{25vt^2 - 10vt\,\overline{QP_1}\cdot\cos\theta c + \overline{QP_1}^2}$$

$$\fallingdotseq \overline{QP_1}\sqrt{1 - 10\frac{vt}{\overline{QP_1}}\cos\theta c}$$

$$\theta_H = \sin^{-1}\frac{h}{\overline{P_2P_1}}$$

$$\overline{P_2P_1}$$

and $\theta_H$ are respectively 390.4357 mm and $2.70117°$ ($= 2°\,42'04''$). Thus, $\theta_H$ is selected to be the inclination angle between the tape and the drum in such a manner that

$$\overline{P_2P_1}$$

may equal

$$\frac{344°}{360°}$$

of the external periphery of the tape guide drum GD.

When reproducing the tape by a VTR of SMPTE (Society of Motion Picture and Television Engineers) type C, in order to form on the tape a slanting track in which the relative speeds of the rotary head and the tape transport speed are coincident with each other the external diameter of the tape guide drum must be selected to be smaller than that of the SMPTE type C VTR by a predetermined amount. How this can be accomplished will now be described with reference to Figure 5.

In Figure 5, a relative speed or velocity

$$\vec{v}$$

between the rotary magnetic head and the tape becomes the sum of a tape transport speed

$$\vec{5vt}$$

(vt is the standard tape running speed or velocity of the tape of the SMPTE type C VTR during normal running) and a linear velocity or speed

$$\overrightarrow{vh}$$

of the rotary magnetic head as expressed by the following equation.

$$\overrightarrow{v} \;=\; \overrightarrow{vh} \;+\; 5\overrightarrow{vt}$$

If the length (track length) of a slanting track formed on the magnetic tape by the rotary magnetic head upon still playback of the SMPTE type C VTR is taken as lc, the track length lc is expressed by the following equation.

$$lc = \pi \, Dc \,.\, (\phi \, c/360)$$

where Dc is the external diameter of the tape guide drum of the SMPTE type C VTR and $\phi$ c is the tape wrapping angle thereof ($= 340°$).

A track length 1 of a slanting track formed on the tape when the tape transport speed is five times the normal tape speed is expressed as

$$l = \pi \, D \,.\, (\varnothing \, c/360)$$

where D is the external diameter of the tape guide drum of the VTR used in the apparatus presently being described.

Accordingly, $lc^2$ and $l^2$ can be expressed by the following equations:

$$lc^2 = h^2 + (L \cos \theta c - vt)^2$$

$$l^2 = h^2 + (L \cos \theta c - 5vt)^2$$

where h is the length of the track on the tape in its width direction and L is the track length on the tape of the SMPTE type C VTR when the tape is transported at a speed which is five times the normal tape speed.

Consequently, Dc/D can be expressed as follows:

$$Dc/D = \{ h^2 + (L \cos \theta c - vt)^2 \}^{\frac{1}{2}} \times \{ h^2 + (L \cos \theta c - 3vt) \}^{-\frac{1}{2}}$$

Thus, the outer diameter D($<$Dc) of the tape guide drum is selected.

The tape pattern of the tape recorded by the tape guide drum, the rotary magnetic head, the tape transport system and so on, which are determined as above, can satisfy the standards of the SMPTE type C VTR.

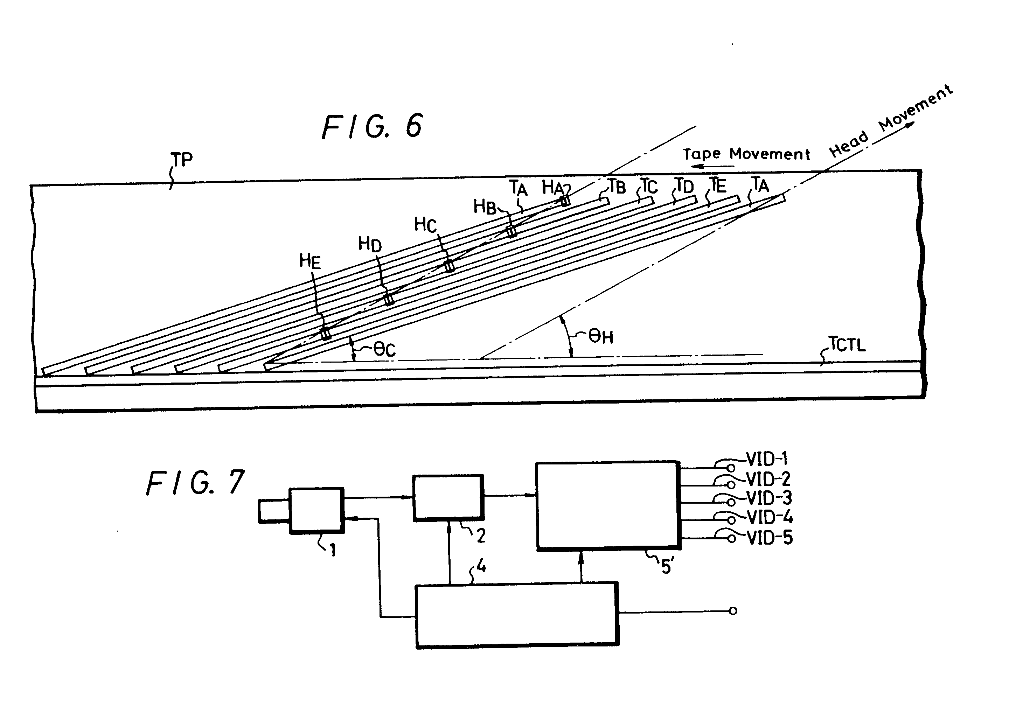

Figure 6 shows the tape pattern suited for the standard of the SMPTE type C VTR and the positional relationship between the rotary magnetic heads $H_A$ to $H_E$ and the corresponding slanting tracks. In Figure 6, a reference TP designates the magnetic tape and references $T_A$ to $T_E$ designate slanting tracks corresponding to the rotary magnetic heads $H_A$ to $H_E$. A reference $T_{CTL}$ designates a control signal track.

When the tape recorded as described above is reproduced by a VTR complying with the standard of the SMPTE type C format in a normal playback mode, it is possible to reproduce the video picture moving at high speed in slow motion.

Another previously proposed recording apparatus for recording a video signal obtained from a high speed scanning video camera will now be described with reference to Figure 7. If the switches $S_1$ to $S_{10}$, the memory 5, the switches $S_{11}$ to $S_{15}$ and the D/A converters DA-1 to DA-5 of Figure 1 are taken in Figure 7 as one memory 5', this memory 5' will be modified as follows. By way of example, if a serial memory such as a charge-coupled device (CCD) and a shift register is used, the memory 5' can be formed by six field memories, switches, D/A converters and so on. Parts of the apparatus of Figure 7 corresponding to parts in Figure 1 are designated by the same references and will not be described again.

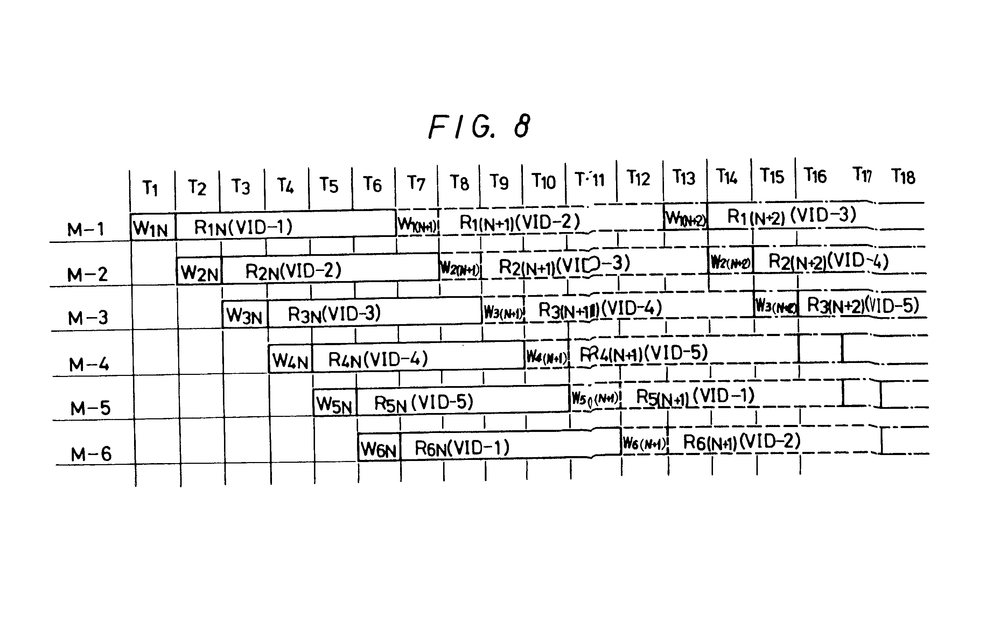

The operation of the memory 5' will be described with reference to Figure 8. In this case, let it be assumed that the memory 5' include six field memories M-1 to M-6. During the field period $T_1$, the digitised video signal is written into and then stored in the memory M-1. During the succeeding field period $T_2$, the video signal is written into the memory M-2. Similarly, the video signal is sequentially written into the memories M-3 to M-6 thereafter. In the field period $T_2$, the video signal $W_{1N}$ written into the memory M-1 during the field period $T_1$ starts to be read out therefrom. Since $f_{R\text{-}CK} = \frac{1}{5} f'_{W\text{-}CK}$ five field periods $T_2$ to $T_6$ are required to read the video signal $W_{1N}$ and to provide the read signal $R_{1N}$.

Similarly, in the field period $T_3$, the video signal $W_{2N}$ stored in the memory M-2 during the field period $T_2$ starts to be read out therefrom. In like manner, five field periods $T_3$ to $T_7$ are required to read the video signal $W_{2N}$ and to provide the read signal $R_{2N}$. The same operation will be carried out in subsequent field periods. In the field period $T_7$, the movable contact c of the switch $S_{11}$ is connected to the fixed contact b so that the video signal $W_{6N}$ stored in the memory $\overline{M}$-6 starts to be read out therefrom to produce the read signal $R_{6N}$. Accordingly, when the written digital video signals $W_{1N}$, $W_{2N}$ ...... are controlled to occupy one field period from the beginning of each field, the read out video signals $R_{1N}$, $R_{2N}$ ...... come to be read out from the beginning of each field so that the D/A converters DA-1 to DA-5 produce the analog video signals VID-1 to VID-5 of 5 phases with a phase interval of

$$\frac{1}{f'_V} = \frac{1}{5} \cdot \frac{1}{f_V}$$

between adjacent phases.

The video signal VID-1 comprises the video signals $R_{1N} \rightarrow R_{6N} \rightarrow R_{1\,(N\,+\,1)} \rightarrow$ ...... which are read sequentially. If, now, $W_{1N}$ is taken as the video signal of the NTSC system in the first field, $W_{2N}$ is the video signal of the second field, ......, $W_{4N}$ is the video signal of the fourth field, $W_{5N}$ is the video signal of the first field and $W_{6N}$ becomes the video signal of the second field ...... . Consequently, the video signal VID-1 comprises sequential video signals $R_{1N}$ (first field) $\rightarrow R_{6N}$ (second field) $\rightarrow R_{1\,(N\,+\,1)}$ (third field) $\rightarrow R_{6\,(N\,+\,1)}$ (fourth field) $\rightarrow R_{1(N\,+\,2)}$ (first field) ...... . In other words, the video signal VID-1 apparently becomes a sequential video signal in accordance with the NTSC system with excellent colour framing properties. Similarly, the video signals VID-2 ...... VID-5 become sequential video signals in accordance with the NTSC system. As a result, the D/A converters DA-1 to DA-5 produce video signals in accordance with the NTSC system with 5 phases.

If the memory 5' in Figure 7 uses a random access memory (RAM), the writing and the reading can be carried out in a time sharing manner so that 5 field memories are sufficient.

While in the apparatus shown in Figure 1 the synchronising signal is separated from the composite video signal derived from the video camera 1 and then is supplied to the clock signal generating system control circuit 4, it is also possible, as shown in Figure 7, for the synchronising signal to be generated from the clock signal generating/system control circuit 4, which then is fed to the video camera 1.

In order that a tape recorded by the above recording apparatus can be reproduced by a VTR of the SMPTE type C format, the slanting tracks formed on the magnetic tape by the five rotary magnetic heads $H_A$ to $H_E$ should each have the same characteristic since the channel of the rotary magnetic head and the reproducing circuit of the VTR are made for one channel.

To this end, there is required an apparatus which reproduces the slanting tracks recorded on the magnetic tape by the respective rotary magnetic heads $H_A$ to $H_E$, checks the same and adjusts and makes uniform the characteristics of the recording systems relative to the rotary magnetic heads $H_A$ to $H_E$ on the basis of the checked results.

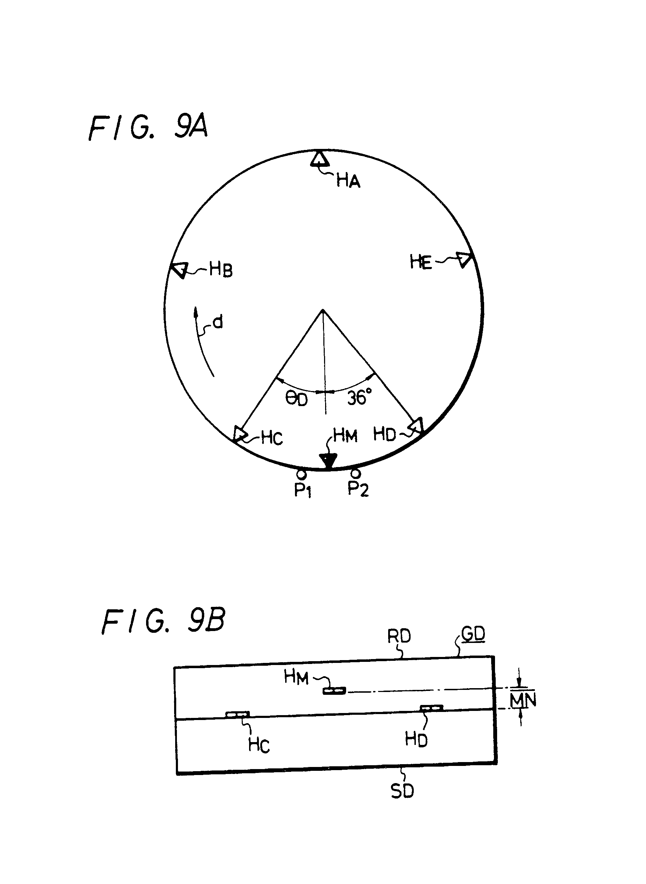

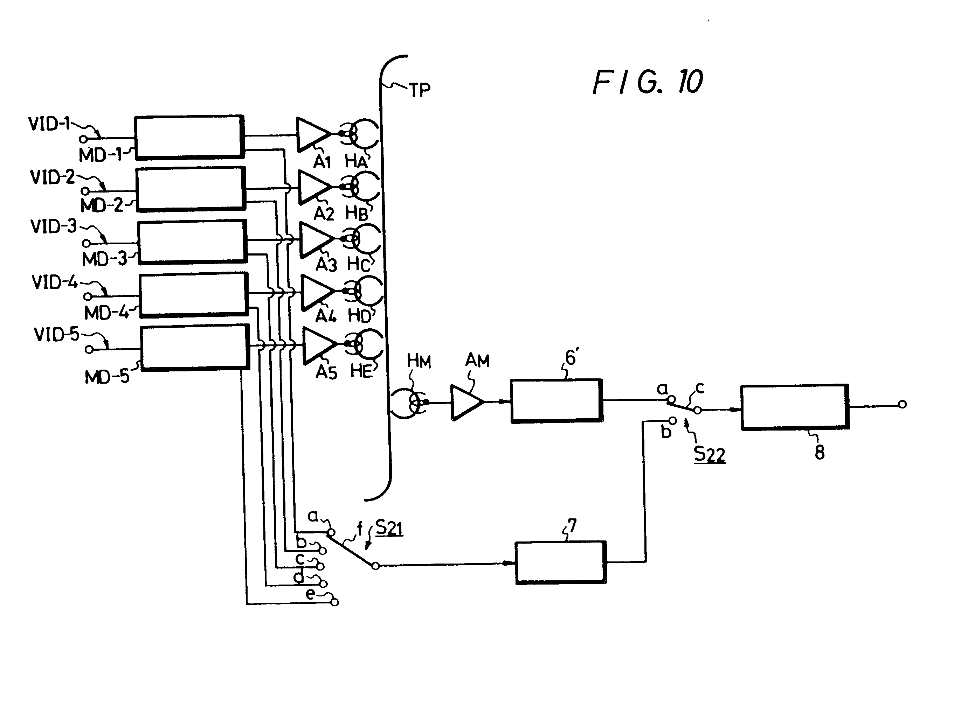

Such a detecting/adjusting apparatus will now be described with reference to Figures 9A, 9B and 10 As shown in Figures 9A and 9B, in addition to the rotary magnetic heads $H_A$ to $H_E$ shown in Figure 3, a rotary magnetic head $H_M$ for monitor playback use is mounted on the rotary drum RD of the tape guide drum GD. In the apparatus of Figure 9, the rotary magnetic head $H_M$ is positioned, for example, substantially centrally between the rotary magnetic heads $H_C$ and $H_D$. An angle $\theta_D$ between the heads $H_C$ and $H_M$ is about $36°$, and a reference $\overline{MN}$ designates a stepped length of the head $H_M$ relative to the heads $H_A$ to $H_E$.

As shown in Figure 10, an output terminal of the rotary magnetic head $H_M$ for monitor playback use is connected through an amplifier $A_M$ to an input terminal of a playback equaliser 6', and an output terminal of the playback equaliser 6' is connected to a fixed contact a of a change-over switch $S_{22}$. The output terminals of the frequency modulators MD-1 to MD-5 for the rotary magnetic heads $H_A$ to $H_E$ are connected to fixed contacts a to e, respectively, of a change-over switch $S_{21}$, and a movable contact f of the change-over switch $S_{21}$ is connected to an input terminal of a mixing circuit 7 which mixes a white reference signal. An output terminal of the mixing circuit 7 is connected to a fixed contact b of the change-over switch $S_{22}$ and a movable contact c of the switch $S_{22}$ is connected to an input terminal of an FM demodulator 8.

The operation of the detecting/adjusting apparatus will now be described. At first, the movable contact c

9

of the change-over switch $S_{22}$ is connected to the fixed contact a, a standard tape recorded by a VTR of SMPTE C type format is transported at a speed five times the normal speed, the tape is reproduced by the rotary magnetic head $H_M$, and the playback system is then adjusted so as to make its characteristic meet with the standard or normalisation. Thereafter, a test signal (for example, a white signal) is supplied to each of the FM modulators MD-1 to MD-5. Then, the movable contact c of the change-over switch $S_{22}$ is connected to its fixed contact b. In the mixing circuit 7, a reference signal having a frequency the same as that of the white signal is inserted into the vertical synchronising signal intervals of the modulated test signals from the FM modulators MD-1 to MD-5. By operating the change-over switch $S_{21}$, the level of the demodulated signal of each channel from the FM demodulator 8 is compared with the level of the reference signal and the gain of the recording system of each channel is adjusted to make the above levels equal to one another.

Thereafter, the movable contact c of the change-over switch $S_{22}$ is connected to its fixed contact a. A test pattern signal is supplied to the respective FM modulators MD-1 to MD-5 and the modulated test pattern signals therefrom are recorded sequentially on the magnetic tape TP by the rotary magnetic heads $H_A$ to $H_E$ so as to form the slanting tracks. At that time, the rotary magnetic head $H_M$ for monitor playback use (the head $H_M$ can be displaced in a direction substantially perpendicular to the tracing direction) is displaced to trace and reproduce the slanting tracks formed by the magnetic heads $H_A$ to $H_E$. In consequence, various characteristics of the recording system of each channel are adjusted to as to make the video level, clamp level, preemphasis frequency characteristic, differential gain, differential phase, waveform characteristic and so on of the test pattern signal, which comprises each demodulated output from the FM-modulator 8, equal to those of the test pattern signal formed by reproducing the standard tape. Thus, the characteristics of the recording systems of the rotary magnetic heads $H_A$ to $H_E$ can be made uniform.

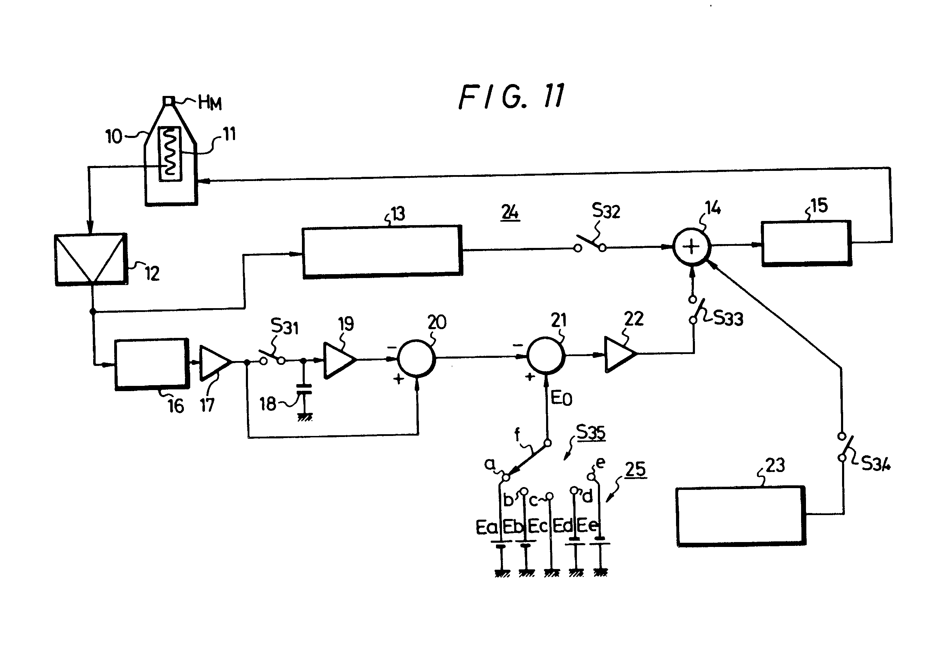

A bias drive circuit for displacing the monitor playback rotary magnetic head $H_M$ will now be described with reference to Figure 11. The rotary magnetic head $H_M$ for monitor playback use is mounted through a bimorph leaf 10 acting as an electro-mechanical transducer element to the rotary drum RD of the tape guide drum GD shown in Figure 9. On this bimorph leaf 10 is attached a strain gauge 11 acting as a mechanical-electric transducer element to detect displacement of the bimorph leaf 10 or the rotary magnetic head $H_M$.

In a dynamic tracking servo circuit 24, the detected displacement output from the strain gauge 11 is supplied through an amplifier 12 to a known dynamic tracking control circuit 13 which is used in the VTR of SMPTE type C format or the like. A control signal from the control circuit 13 is supplied through an on-off switch $S_{32}$, a composer (adder) 14 and a dynamic tracking drive circuit 15 to the bimorph leaf 10 as a displacement drive signal.

Further, the detected displacement signal from the amplifier 12 is supplied through a low-pass filter 16, an amplifier 17 and an on-off switch $S_{31}$ to a hold capacitor 18. The voltage across the capacitor 18 is supplied through an amplifier 19 to a composer (subtractor) 20 and thereby subtracted from the output of the amplifier 17. The output from the composer 20 is supplied to another composer (subtractor) 21 and thereby subtracted from a d c voltage $E_0$ derived from a movable contact f of a change-over switch $S_{35}$ in a d c voltage generating means 25. The output from the composer 21 is supplied through an amplifier 22 and an on-off switch $S_{33}$ to the composer 14 and thereby added to the output from the dynamic tracking control cicuit 13. To fixed contacts a to e of the change-over switch $S_{35}$ are applied d c voltages Ea (>0), Eb (>0), Ec ( = 0), Ed (<0) and Ee (<0), respectively.

An erase signal generating circuit 23 generates an attenuating vibrating or oscillating erase signal which converges or decays to 0V. The erase signal from the circuit 23 is supplied through an on-off switch $S_{34}$ to the composer 14.

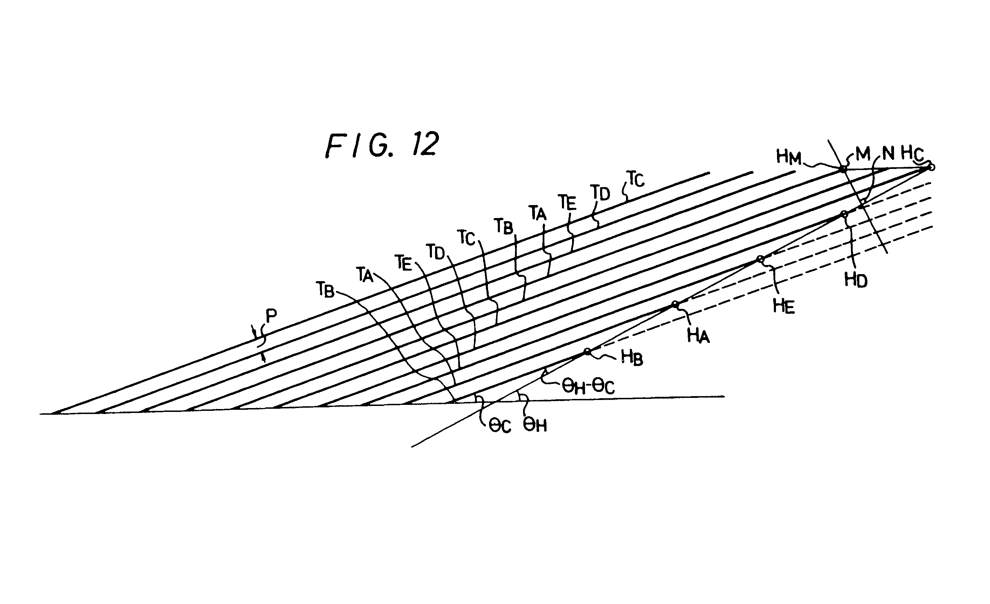

The operation of the circuit shown in Figure 11 will now be described with reference to Figure 12. Figure 12 shows the tracks on the tape and the magnetic heads at some instant in the recording mode, more specifically an instant when the rotary head $H_C$, for example, has just finished tracing one track. In Figure 12, references $T_A$ to $T_E$ designate tracks traced by the heads $H_A$ to $H_E$, respectively, and M designates a neutral position of the movable playback head $H_M$ when the bimorph leaf 10 is in the non-bias state. A straight line MN designates a line along which the movable head $H_M$ is moved. The position M of the movable playback head $H_M$ is on the track $T_A$ traced by the head $H_A$. When the movable head $H_M$ is moved by 2 track pitches along the line MN in a positive direction, the position M is on the track $T_D$. When the movable head $H_M$ is moved by one track pitch in the positive direction, the position M is on the track $T_E$. When the movable head $H_M$ is moved by one track pitch in the negative direction, the position M is on the track $T_B$. When the movable head $H_M$ is moved by 2 track pitches in the negative direction, the position M is on the track $T_C$. Thus, the respective tracks can be reproduced. In practice, the position of the movable head $H_M$ is determined in such a manner that the position N may be disposed between the tracks $T_D$ and $T_C$ on the track on which the position M is disposed. In this case, if the position N is disposed at the middle point between the tracks $T_D$ and $T_C$, the line $\overline{MN}$ becomes 2.5 track pitches. In general, the line $\overline{MN}$ is given by

$$\overline{MN} \doteq 2p + \overline{CN} \tan(\theta_H - \theta_C)$$

where p is the track pitch, C is the position of the head $H_C$, $\theta_H$ is the helix angle and $\theta_C$ is the track angle. In the above equation, if p = 0.18 mm and $\overline{CN}$ tan $(\theta_H - \theta_C)$ = 0.5p, $\overline{MN}$ becomes 0.45 mm.

In Figure 11, when the recording mode is selected the switch $S_{32}$ is turned off once to open the dynamic tracking loop and thereafter the switch $S_{34}$ is turned

$$\overline{MN} \doteq 2p + \overline{CN} \tan(\theta_H - \theta_C)$$

on to apply the erase signal to the bimorph leaf 10 of the head $H_M$ whereby the bimorph leaf 10 is returned to the neutral position. At that time, the head $H_M$ should trace the track $T_A$. In this state, the dynamic tracking loop is closed once. At this time, the head $H_M$ traces the track $T_A$ in a just tracking state. At that time, when the switch $S_{33}$ is turned off and the switch $S_{31}$ is turned on, the output from the low-pass filter 16 is held in the capacitor 18. After the switch $S_{31}$ is turned off and the switch $S_{33}$ is turned on, when the movable contact f of the switch $S_{35}$ is connected to the fixed contact a, the voltage Ea corresponding to 2 track pitches of the output from the strain gauge 11 is amplified by the amplifier 22 and then supplied to the circuit 15 so that the output from the strain gauge 11 is substantially made coincident with the voltage Ea. Thus, the head $H_M$ is moved by 2 track pitches to trace the corresponding track.

When the movable contact f of the switch $S_{35}$ is sequentially thereafter connected to the fixed contacts b ...... e, the head $H_M$ traces the respective tracks $T_A$ to $T_E$.

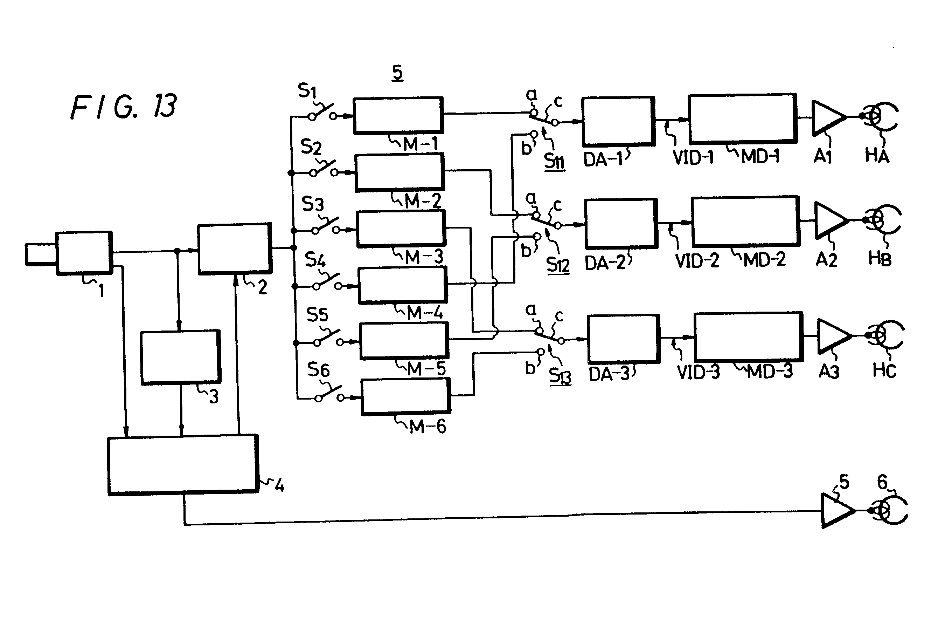

Another previously proposed recording apparatus for recording a video signal obtained from a high speed scanning camera will now be described with reference to Figure 13. In Figure 13, parts corresponding to parts shown in Figure 1 are designated by the same references and will not be described again. The apparatus of Figure 13 uses a video camera having a scanning speed which is three times the scanning speed of the standard television signal of the NTSC system.

If the subcarrier frequency, horizontal frequency, vertical frequency and frame frequency of the video signal are respectively taken as $f''_{SC}$, $f''_H$, $f''_V$ and $f''_{FR}$, they can be expressed as follows:

$$f''_{SC} = \frac{910}{4} \cdot f'_H = 10.7 \ (\mathrm{MHz})$$

$$f''_H = \frac{525}{2} \cdot f'_V = 47.25 \ (\mathrm{kHz})$$

$$f''_V = 180 \ (\mathrm{Hz})$$

$$f''_{FR} = \frac{1}{2} f'_V = 90 \ (\mathrm{Hz})$$

The digitised video signal from the A/D converter 2 is supplied through the on-off switches $S_1$ to $S_6$ to the field memory 5 (including memories M-1 to M-6) and written therein with the date rate of the write frequency $f'_{W-CK}$. The digitised video signals read out from the field memories M-1, M-4; M-2, M-5; and M-3, M-6 with the date rate of the read frequency $f_{R-CK}(= \frac{1}{3} f'_{W-CK})$ are supplied through respective change-over switches $S_{11}$ to $S_{13}$ (each of which includes the fixed contacts a, b, and the movable contact c) to the D/A converters DA-1 to DA-3 and thereby converted to analog signals in response to the clock signal with the read frequency $f_{R-CK}$. The analog video signals VID-1 to VID-3 from the D/A converters DA-1 to DA-3 are supplied to frequency modulators MD-1 to MD-3, respectively, and thereby frequency modulated. The frequency modulated video signals VID-1 to VID-3 are supplied through respective amplifiers $A_1$ to $A_3$ to

three rotary magnetic heads $H_A$ to $H_C$, which are located with an angular distance of $120°$ between adjacent ones, and thereby recorded on the magnetic tape so as sequentially to form adjoining slanting tracks.

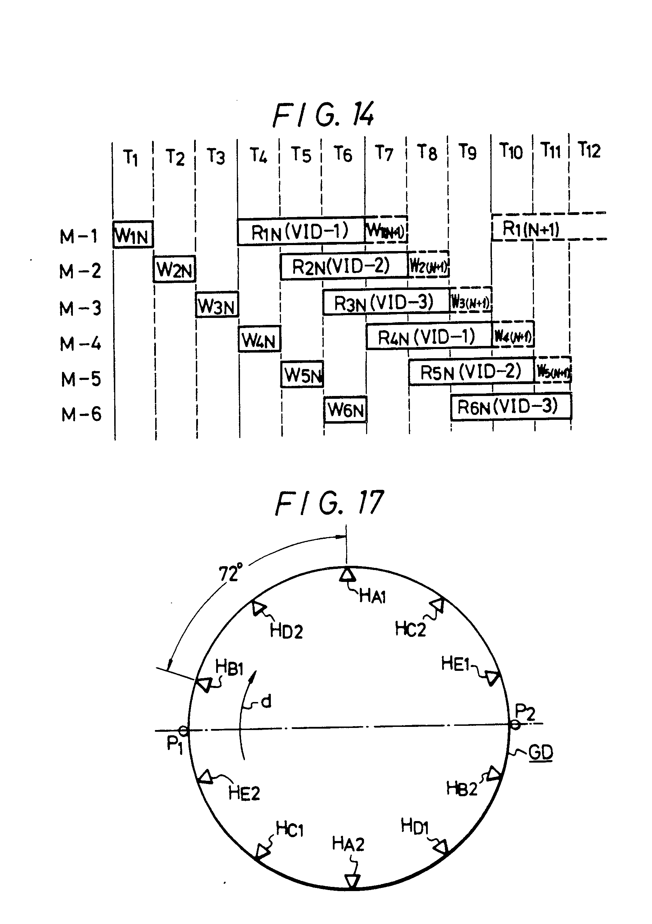

The operation of the apparatus shown in Figure 13 will now be described with reference to Figure 14. In Figure 14, references $T_1$, $T_2$, $T_3$ ...... designate field periods, each of which has a time width or duration T

$$(= \frac{1}{f''_V}).$$

During the period $T_1$, only the switch $S_1$ is turned on so that the digitised video signal is written into the memory M-1. During the next period $T_2$, only the switch $S_2$ is turned on to allow the digitised video signal to be written into the memory M-2. In like manner, the digitised video signals are thereafter sequentially written into the memories M-3 to M-6.

In the field period $T_4$, the movable contact of the switch $S_{11}$ is connected to its fixed contact a so that the video signal $W_{1N}$ stored in the memory M-1 during the field period $T_1$ starts to be read out therefrom. Since $f_{R-CK} = \frac{1}{3} f'_{W-CK}$, 3 field periods $T_4$ to $T_6$ are required to read the video signal $W_{1N}$ and to provide the read signal $R_{1N}$.

Similarly, in the field period $T_5$, the video signal $W_{2N}$ stored in the memory M-2 during the field period $T_2$ starts to be read out therefrom. Again, three field periods $T_5$ to $T_7$ are required to read the video signal $W_{2N}$ and to provide the read signal $R_{2N}$. The same operation will be carried out for subsequent field periods. In the field period $T_{11}$, the movable contact c of the switch $S_{11}$ is connected to its fixed contact b so that the video signal $W_{4N}$ stored in the memory M-4 is read out therefrom, thereby to obtain the read signal $R_{4N}$. Thus, when the written digital video signals $W_{1N}$, $W_{2N}$ ...... are controlled to occupy an amount of one field starting from the beginning of each field, the read video signals $R_{1N}$, $R_{2N}$ ...... become such as to be read out from the beginning of each field. Accordingly, the D/A converters DA-1 to DA-3 produce 3-phase analog video signals VID-1 to VID-3 with a phase distance of between adjacent phases.

$$\frac{1}{f'''_V} = \frac{1}{3} \cdot \frac{1}{f_V}$$

The video signal VID-1 comprises the video signals $R_{1N} \to R_{4N} \to R_{1(N+1)} \to$ ...... which are sequentially read out. If, now, $W_{1N}$ is taken as the video signal of the NTSC system in the first field, $W_{2N}$ becomes the video signal of the second field ......, $W_{4N}$ the video signal of the fourth field, $W_{5N}$ the video signal of the first field, and $W_{6N}$ the video signal of the second field, ...... . Accordingly, the video signal VID-1 comprises the video signal $R_{1N}$ (first field) $\to R_{4N}$ (fourth field) $\to R_{1(N+1)}$ (third field) $\to R_{4(N+1)}$ (second field) $\to R_{1(N+2)}$ - (first field) ...... . The colour framing thereof is thus defective. Therefore, if the video signals are encoded after being converted from digital to analog signals, it is necessary for the video signal $R_{4N}$ (fourth field), $R_{4(N+1)}$ (second field) ...... to invert the phase of the carrier chrominance signal thereof. The video signals VID-2 to VID-3 must undergo the same processing. Accordingly, in this case, if the colour encoder which produces the composite colour video signal according to the NTSC system in the video camera 1 is provided with means for inverting the phase of the carrier chrominance signal, signals having no apparent colour framing property can be produced as the video signals VID-1 to VID-3.

Consequently, according to the previously proposed recording apparatus, a colour video signal which requires a tracing speed which is N times the normal value of the NTSC system is produced from the video camera in the form of a component signal and then written into the memory, the storage capacity of which is N fields or more. The N-channel component video signals having the normal tracking speed are produced from the memory and then encoded to form signals in accordance with the NTSC system, to thereby produce NTSC colour video signals. The NTSC colour video signals are then supplied to N rotary magnetic heads and the N-channel colour video signals are recorded on the magnetic tape so as sequentially to form adjoining slanting tracks. In this previously proposed recording apparatus for recording a video signal obtained from a high speed scanning video camera, if N is 4n + 1 or 4n - 1 (where n = 1, 2, 3, ......), the arrangement of the colour encoder becomes different. When N = 4n + 1, the colour encoder may be an ordinary NTSC system encoder. On the other hand, when N = 4n - 1, in order to record on the tape a colour video signal with colour framing properties, the NTSC system colour encoder must be modified so as to invert the phase of the colour subcarrier signal of each channel at every field.

If the previously proposed recording apparatus is used to process a colour video signal in accordance with the SECAM system, the colour encoder must carry out the same colour framing operation as that of the colour video signal of the NTSC system.

For a colour video signal of the PAL (Phase Alteration Line) system, when N = 8n + 1 (n is an even number and N = 4n + 1, where n = 1, 2, 3, ......), the colour encoder may be an ordinary PAL system encoder. When N = 8n - 3 (n is an odd number and N = 4n + 1, where n = 1, 2, 3, ......), the colour encoder must be modified so as to produce a colour video signal with the colour framing recorded on the tape when the colour video signal is encoded after being converted from digital to analog signals for the PAL system.

Accordingly, when N is an odd number equal to 3 or more, the arrangement of the colour encoder becomes simple. If this simple arrangement of the colour encoder it not needed or desired, N may be an even number.

According to the above-described recording apparatus for recording a video signal obtained from a high speed scanning video camera, a phenomenon moving at high speed can easily be picked up and rcorded by means of a television camera and a VTR. A tape recorded by such recording apparatus can be reproduced by a VTR of a normal system or type, that is to say it is possible to obtain a recorded tape which has compatibility.

When N = 4n ± 1 (n = 1, 2, 3, ......), the arrangment of the colour encoder is simple for each television system.

The above-described recording apparatuses record a video signal derived from a television or video camera having a line scanning speed which is three or five times greater than the standard television signal so as to be reproducible by a VTR of SMPTE C type format, or to produce a tape having compatibility. Various variations and modifications as regards the application of the above technical idea can be considered. More particularly, it is possible to record a video signal derived from a television camera having a line scanning speed of, for example, five times, 5 x 2 = 10 times and 5 x 3 = 15 times that of the standard television signal. To this end, the television camera must be controlled to make the line scanning speed equal to 5 x M times (M = 1, 2, 3, ......) that of the standard television signal. If the speed of revolution of the rotary drum is increased to be M times the normal speed of revolution with the tape speed five times the normal speed, it is possible to record video signals of various line scanning speeds. In this case, if the speed of the revolution of the rotary drum is made equal to M times the normal speed of revolution, there is some risk of the occcurrence of the above-mentioned defects, namely difficulty in obtaining a corresponding relationship between emphasis and deemphasis, difficulty in securing the characteristics of the recording and reproducing circuit, problems of rotary transformer characteristic and the air film, or the like. However, the inventor of the applicants' above-cited co-pending European patent application has ascertained that if the speed of revolution of the rotary drum is made equal to three times the normal speed of revolution, the above defects do not become significant. However, if the speed of revolution of the rotary drum is made equal to four or more times the normal speed of revolution, the above-mentioned defects cannot be neglected and cannot be compensated for.

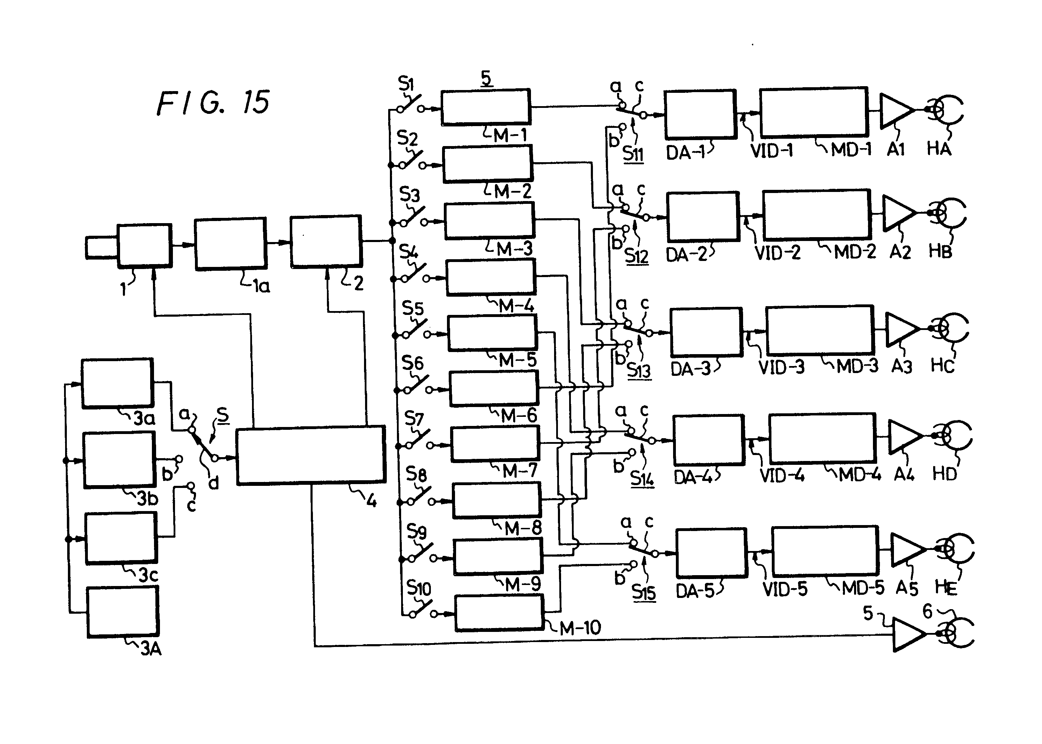

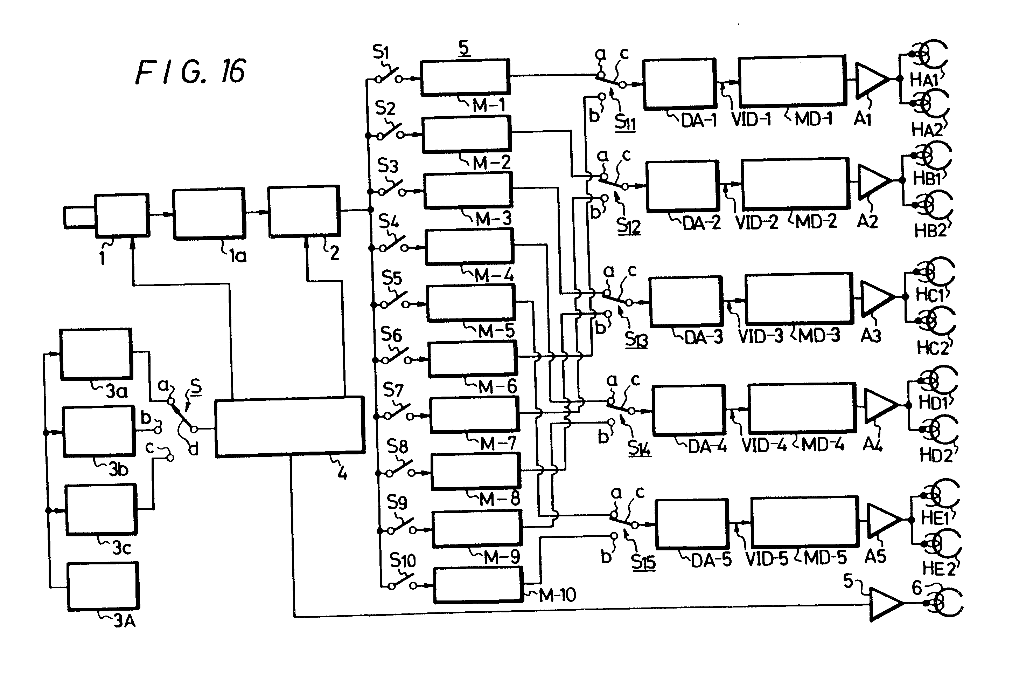

Further previously proposed recording apparatuses for recording a video signal obtained from a high speed scanning video camera, in which the speed of revolution of the rotary drum can be selectively switched, will now be described with reference to Figures 15 and 16. In Figures 15 and 16, except for an arrangement for selecting a line scanning speed of a television camera, parts corresponding to parts shown in Figure 1 are designated by the same references and will not be described again.

The recording apparatus shown in Figure 15 comprises memory means for storing a video signal derived from a video camera, the scanning speed M.N.Sn of which is M.N (where M and N are natural numbers) times the scanning speed Sn of a standard television signal, and N rotary magnetic heads supplied with video signal of N channels read out in parallel from the memory means to have a scanning speed M.Sn which is M times the scanning speed Sn of the standard television signal and rotating at a speed of revolution equal to M times the normal speed of revolution, wherein the value of M in the scanning speed M.N.Sn of the video camera is changable in multiple stages, the speed of revolution of the rotary magnetic heads being changed in multiple stages in accordance with the change of the value of M, and the video signals of N-channels being recorded on the magnetic tape by the N rotary magnetic heads so as sequentially to form adjoining slanting tracks.

The recording apparatus shown in Figure 16 comprises memory means for storing a video signal derived from a video camera, the scanning speed M.N.Sn of which is M.N (where M and N are natural numbers) times the scanning speed Sn of a standard television signal, and 2N rotary magnetic heads supplied with video signals of N-channels read out in parallel from the memory means to have a scanning speed M.Sn which is M times the scanning speed Sn of the standard television signal and rotating at a speed of revolution equal to M/2 times the field number of the standard television system, wherein the scanning speed M.N.Sn of the video camera is changable in multiple stages by changing the value of M, the speed of revolution of the rotary magnetic heads being changed in multiple stages in accordance with the change of the value of M, and the video signals of N-channels being recorded on the magnetic tape by the 2N rotary magnetic heads so as sequentially to form adjoining slanting tracks.

According to the apparatuses shown in Figures 15 and 16, phenomena moving at high speed can easily be picked up and recorded by using the television camera and the VTR. Also, the line scanning speed of the television camera can be changed in accordance with the moving phenomenon.

The previously proposed recording apparatuses shown in Figures 15 and 16 will now be described in detail.

In Figure 15, a reference numeral 1 designates an imager or video camera which includes an image element such as a pickup tube, a solid state image element or the like, a driving means therefor, a signal processing circuit and so on. In this case, the video camera 1 also includes an encoder which produces a composite colour video signal according to the NTSC system. However, it is possible to provide such encoder in the signal processing circuit or system (for example in a subsequent D/A converter which will be described later) at a stage subsequent to the video camera 1.

The composite colour video signal from the video camera 1 is supplied through a gain change-over circuit 1a to an A/D converter 2 and thereby digitised. A reference numeral 4 designates a clock signal generating/system control circuit which produces a clock signal and a control signal including various synchronising signals and colour framing and which controls the whole system. An oscillatory signal having a frequency of $6f_c$ and produced by a reference oscillator 3A is supplied to frequency dividers 3a, 3b and 3c, the frequency dividing ratios of which are 1/6, 1/3 and 1/2, respectively, and thereby frequency-divided, whereby reference clock signals of frequencies $f_c$, $2f_c$, and $3f_c$ can be selected by a switch S (having fixed contacts a, b, c and a movable contact d) and supplied to the circuit 4. Also, the gain of the gain change-over circuit $\overline{1a}$ $\overline{is}$ switched in response to switching of the switch S.

In the previously proposed recording apparatus shown in Figure 16, the rotary magnetic heads $H_A$ to $H_E$ shown in Figures 1 and 15 are respectively replaced with pairs of rotary magnetic heads $H_{A1}$, $H_{A2}$; ...... $H_{E1}$, $H_{E2}$. In Figure 16, parts corresponding to parts shown in Figure 1 or Figure 15 are designated by the same references and will not be described again. The apparatus of Figure 16 makes use of a video camera having a scanning speed which is 5M times, or 5, 10 and 15 times, the scanning speed Sn of the standard NTSC system television signal, namely scanning speeds 5Sn, 10Sn and 15Sn of the multiple stages.

The frequency modulated video signals from the frequency modulators MD-1 to MD5 are respectively supplied through the amplifiers $A_1$ to $A_5$ to the five pairs of rotary magnetic heads $H_{A1}$, $H_{A2}$; ...... $H_{E1}$, $H_{E2}$ simultaneously or selectively. On the magnetic tape, 5 adjoining slanting tracks are sequentially formed by the heads $H_{A1}$ to $H_{E1}$ and 5 slanting tracks by the heads $H_{A2}$ to $H_{E2}$, alternately.

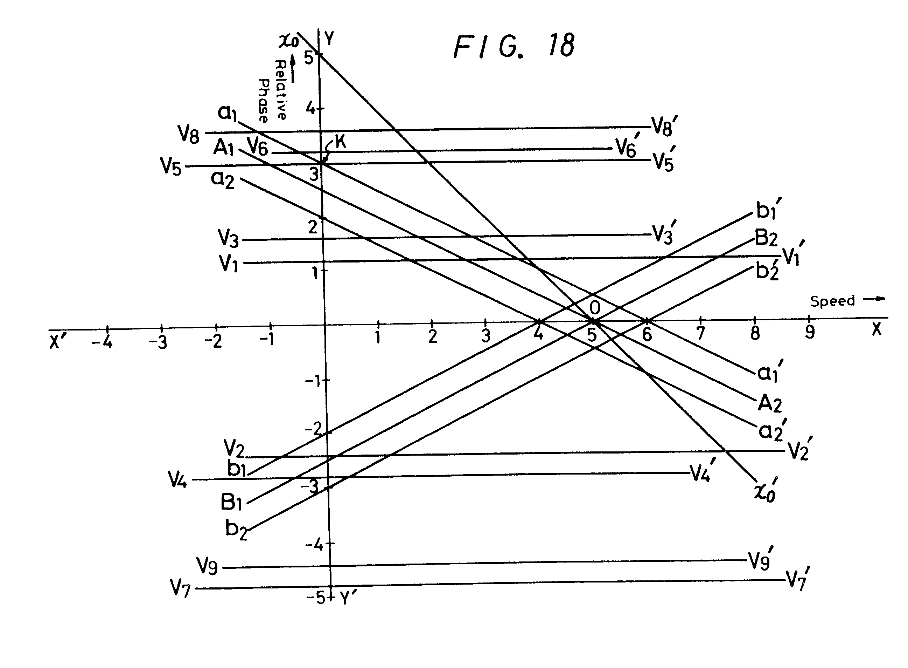

Figure 17 shows the arrangement of the rotary magnetic heads $H_{A1}$, $H_{A2}$; ...... $H_{E1}$, $H_{E2}$. The rotary magnetic heads $H_{A1}$, $H_{A2}$; ...... $H_{E1}$, $H_{E2}$, each pair having an angular distance of $180°$ therebetween, are respectively mounted on the rotary drum RD of the tape guide drum GD with an angular distance of $72°$ and rotated by one revolution at each period of

$$\frac{2}{Mf_V},$$

or 30M (Hz) in the clockwise direction in accordance with the value M/2. A tape to be recorded is wrapped around the tape guide drum GD along its external periphery from the point $P_2$ to the point $P_1$ in the anticlockwise direction. The tape wrapping angle is selected to be about $180°$ or more. The tape transport speed is selected to be 5M times the value vt of the normal transport speed.

The diameter of the tape guide drum GD is selected in such a manner that the relative speed between the head and the tape becomes equal to that in the case in which five rotary magnetic heads are provided. And, if a tape recorded so as to have a track pattern which can be reproduced by a standard 2-head type VTR is formed and reproduced by the standard VTR at normal playback speed, phenomena moving at high speed can be reproduced in slow motion.

In this apparatus, when the monitor playback rotary magnetic head is provided, it is possible to use a pair of rotary magnetic heads (movable head) having an angular spacing of $180°$ therebetween.

The previously proposed arrangements set forth above provide recording apparatus for recording a video signal obtained from a high speed scanning video camera which can easily pick up and record phenomena moving at high speed by using a television camera and a VTR.

The arrangements shown in Figures 15 and 16 provide recording apparatus which can easily pick up and record phenomena moving at high speed by using a television camera and VTR and which can record phenomena moving at high speed with an optimum recording frequency matching the speed of the high speed motion phenomenon.

According to the apparatus shown in Figure 16, when 2N rotary magnetic heads are rotated at a speed of revolution equal to M/2 times the standard speed of revolution, the rotary magnetic heads can trace the magnetic tape with a contact angle larger than that provided when N rotary magnetic heads are rotated at a speed of revolution equal to M times the standard speed of revolution. Thus, it is possible to widen the speed range upon playback to different speeds at which a stable picture can be reproduced.

In a VTR of SMPTE type C, in the case of the NTSC system, a video signal from the 15th line of a 1st field to the first half of the 4th line of a 2nd field is recorded on one slanting track, while a video signal from the second half of the 14th line of the 2nd field to the 4th line of the 1st field is recorded on an adjacent slanting track. Between the video signals recorded on the adjacent slanting tracks there is a phase deviation of 2.5 H (where H represents the horizontal period). Further, if the vertical blanking period of the video signal between the 1st and 2nd fields is taken as the 1st to 20th lines, in the first field, no video signal is recorded on the slanting track during 10 line periods of the 5th line to the 14th line of the vertical blanking period in the first field, while no video signal is recorded on the slanting track during 10 line periods of the second half of the 4th line to the first half of the 14th line of the vertical blanking period in the second field.

Generally, when a magnetic tape on which a video signal is recorded is reproduced in a VTR at a tape speed different from that upon recording, the rotary magnetic head traces in a slantwise manner the slanting tracks formed parallel to each other. If the magnetic tape on which the video signal is recorded is reproduced in slow to still modes or in a reverse playback mode in such a manner that the direction of rotation of the rotary magnetic head is made opposite to the transport direction of the magnetic tape, the frequency of the reproduced video signal is lowered as compared with that of the video signal upon the recording mode; namely, the video signal is expanded in time so that the period during which the video signal is not reproduced is widened over 10 lines. This will be described with reference to Figure 18.

In Figure 18, an abscissa X-X' indicates the tape transport speed (where the normal tape speed is taken as 1), and an ordinate Y-Y' indicates the relative phase (where 2.5 H is taken as 1) of the video signal reproduced from the magnetic tape on which the video signal is recorded by the high speed scanning video camera. The case where the magnetic tape is transported at a tape speed which is 5 times the normal tape speed and a video signal is then recorded, while the magnetic tape is transported at a tape speed lower than the normal tape speed and then reproduced, will be explained by way of example.

A straight line $O\text{-}x_0$ in Figure 18 indicates a relationship between a point in which, upon reproducing, the rotary magnetic head is in position in a just tracking state at the beginning of a slanting track, traces the slanting track with dynamic tracking and at last no reproduced output is produced therefrom, and the tape transport speed. In other words, bent lines $x_0 \text{ - } O \text{ - } X'$ and $X \text{ - } O \text{ - } x'_0$ respectively indicate the expanded time and compressed time of the reproduced video signal at each tape transport speed.

Moreover, in the ordinary dynamic tracking system, respective regions of the bent lines $x_0 \text{ - } O \text{ - } X'$ and $x'_0 \text{ - } O \text{ - } X$ are converted to respective regions shown by the bent lines $A_1 \text{ - } O \text{ - } B_1$ and $A_2 \text{ - } O \text{ - } B_2$, thereby being made symmetrical with each other with respect to the abscissa X' - X. Then, the straight lines $O \text{ - } B_1$ and $O \text{ - } A_1$ respectively become the centre of designing the beginning and end portions at which the rotary magnetic head starts to or ceases to make contact with the slanting track of the magnetic tape. The region of the bent line $A_1 \text{ - } O \text{ - } B_1$ becomes a region in which the video signal cannot be reproduced.

Straight lines $V_1 \text{ - } V'_1$ and $V_2 \text{ - } V'_2$ parallel to the abscissa X-X' respectively indicate limits at which the vertical blanking period of the video signal can be reproduced, while straight lines $V_3 \text{ - } V'_3$ and $V_4 \text{ - } V'_4$ parallel to the abscissa X-X' respectively indicate the end and beginning of the video period of the video signal.

When, upon playback at a tape transport speed different from that upon recording, an ideal jump processing operation is performed, considering that the rotation phase of the capstan is continuous and that the jump processing condition for maintaining the tracking is some integral multiple of one pitch ( = 2.5H), the rotary magnetic head for performing the dynamic tracking ceases to make contact with the magnetic tape in the region between straight lines $a_1 \text{ - } a'_1$ and $a_2 \text{ - } a'_2$, while it starts to make contact with the magnetic tape in a region between straight lines $b_1 \text{ - } b'_1$ and $b_2 \text{ - } b'_2$.

Accordingly, after the ordinary signal processing is performed and the SMPTE type C format is followed, when the video signal recorded on the magnetic tape at a tape speed equal to 5 times the normal tape speed is reproduced at a tape speed of about 3.6 times the normal tape speed, it becomes difficult to reproduce the end portion of the vertical blanking period of the video signal. When such video signal is reproduced at a tape speed equal to about 2.8 times the normal tape speed, the end portion of the video period of the video signal begins to be dropped.

From the above considerations, it can be understood that a magnetic tape on which a video signal is recorded at a tape speed equal to 5 times the normal tape speed cannot be reproduced at a tape speed equal to or less than about 3.6 times the normal tape speed. In this connection, a magnetic tape on which a video signal is recorded at tape speed equal to 3 times the normal tape speed cannot be reproduced at a tape speed equal to or less than about 1.6 times the normal tape speed.

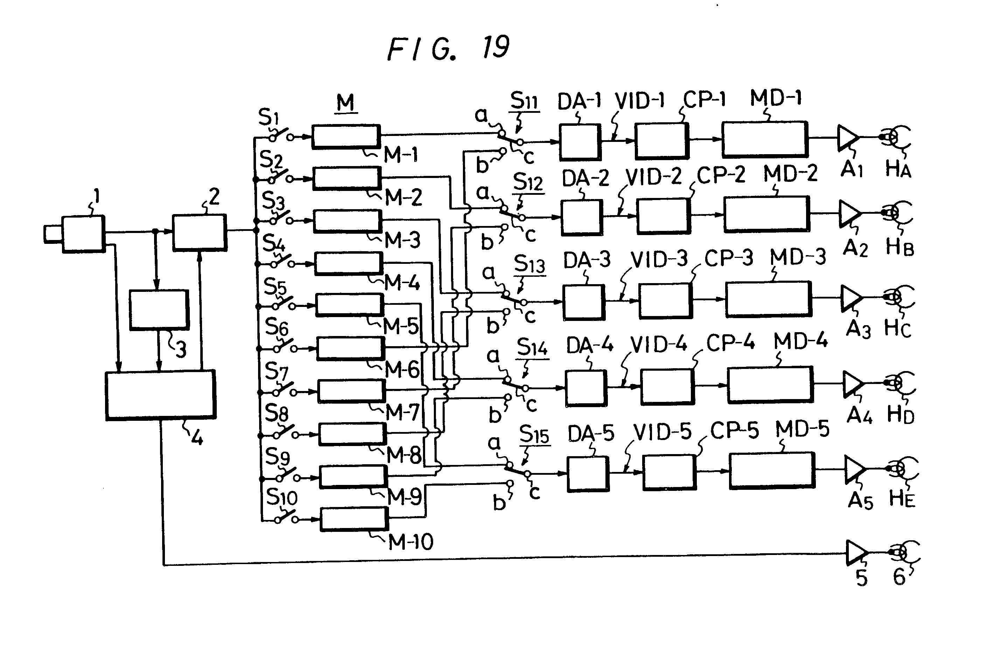

A recording and reproducing apparatus embodying the present invention will now be described with reference to Figures 19 to 21. First, an explanation will be given of a case where a magnetic tape on which a video signal is recorded at a tape speed of, for example, five times the normal tape speed, is reproduced. Let it be considered that such a magnetic tape can be reproduced at a tape speed of, for example, up to 0 times (still mode) the normal tape speed. In this case, it is necessary that, in Figure 18, the playback limit of the vertical blanking period of the video signal $V_1 - V'_1$ (playback limit of the end side of the picture screen) be shifted above a straight line $V_5 - V'_5$ which passes through a point K of intersection between the ordinate Y-Y' and the straight line $a_1 - a'_1$ and which is parallel to the abscissa X-X'. Similarly, in the beginning side of the picture screen, the straight lines $b_2 - b_2'$ and $V_4 - V'_4$ are quite close to each other so that there is no extra region.

Therefore, if the straight line $V_1 V'_1$ is moved upwardly by a relative phase of 2 to become a straight line $V_6 - V'_6$ and the straight line $V_4 - V'_4$ is moved downwardly by the relative phase of 2 to because a straight line $V_7 - V'_7$, the length of the slanting track is increased by a relative phase of 4, namely 10 H. In other words, the vertical blanking period becomes longer by 10 H. Accordingly, the straight line $V_3 - V'_3$ is moved upwardly by the relatively phase of 2 to be a straight line $V_8 - V_8'$, while the straight line $V_2 - V'_2$ is moved downwardly by the relative phase of 2 to be a straight line $V_9 - V'_9$.

The recording and reproducing apparatus embodying the invention, for recording and reproducing a video signal obtained from a high speed scanning video camera, is shown in Figure 19. In Figure 19, parts corresponding to parts shown in Figure 1 are designated by the same references and will not be described in detail. In the embodiment of Figure 19, compressors CP-1 to CP-5 are connected between the D/A converters DA-1 to DA-5 and the frequency modulators MD-1 to MD-5, respectively, to act as frequency converting means. The compressors CP-1 to CP-5 compress only the line scanning speed, namely the horizontal frequencies, of the analog video signals VID-1 to VID-5 from the D/A converters DA-1 to DA-5, respectively, by

$$(1 + \frac{20}{525})$$

times. Accordingly, if the sub-carrier frequency, the horizontal frequency, the vertical frequency and the frame frequency of the video signals (NTSC system) developed at outputs of the compressors CP-1 to CP-5 are respectively taken as $(f_{SC})$, $(f_H)$, $f_V$ and $f_{FR}$, they can be expressed as:

$$(f_{SC}) = \frac{910}{4} f_H = 3.72 \ (MHz)$$

$$(f_H) = \frac{525}{2} (1 + \frac{20}{525}) \ f_V = 16.35 \ (kHz)$$

$f_V = 60 \ (Hz)$

$f_{FR} = 30 \ (Hz)$

Moreover, the carrier frequency of the frequency modulators MD-1 to MD-5 is selected to be

$$5(1 + \frac{20}{525})$$

times the standard value. Furthermore, the rotary magnetic heads $H_A$ to $H_E$ are rotated at the standard speed of revolution and the magnetic tape (not shown) is transported at a tape speed equal to 5 times the standard tape speed.

Thus, the vertical blanking period of the video signal in each field recorded on the magnetic tape so as to form the slant track is made longer by an amount equal to 10 H.

In this case, instead of providing the above compressors CP-1 to CP-5, it is possible for the horizontal frequency of the video camera to be selected to be

$$5 \left(1 + \frac{20}{525}\right)$$

times the reference frequency $f_H$. Alternatively, it is also possible for the read frequency of the field memories M-1 to M-5 to be selected to be equal to $\frac{1}{5}$

$$\left(1 + \frac{20}{525}\right)$$

$f'_{W\text{-}CK}$.

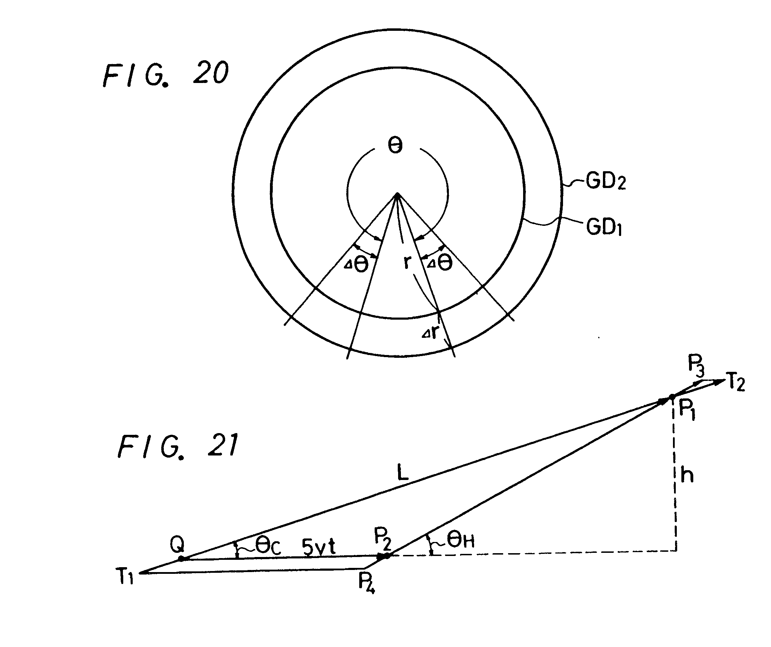

In order to obtain a magnetic tape having a track pattern suitable for the format of the SMPTE type C VTR, it is necessary that the diameter D of the above tape guide drum be increased to be D'. This will be described next. In Figure 20, a reference $GD_1$ designates a tape guide drum having the diameter D and a reference $GD_2$ designates a tape guide drum having the diameter D'. Let it be assumed that D is 2r and D' is 2(r + $\Delta$ r), where r is the radius of the tape guide drum $GD_1$. $\theta$ designates a standard tape wrapping angle ( = 344°) with which the tape is wrapped around the tape guide drum $GD_1$. In addition, the speed of revolution of each rotary drum of the tape guide drums $GD_1$ and $GD_2$ is selected to be same as the other. Although r$\theta$ is a standard track length (format of the SMPTE type C VTR) formed by the rotary magnetic head of the tape guide drum $GD_1$, since the horizontal scanning speed of the video signal to be recorded is compressed to

$$\left(1 + \frac{20}{525}\right),$$

the track length becomes shortened to r($\theta$ - 2 $\Delta\theta$). Therefore, the track length is made equal to the standard track length r$\theta$ by increasing the diameter of the tape guide drum from D to D'. This can be expressed by the equation:

$$r\theta = (r + \Delta r)(\theta - 2 \Delta\theta)$$

or $\Delta\theta$ (r + $\Delta$r) becomes equal to 2p, in which p represents the length corresponding to 2.5 H. From the above equation, D'/D, namely, (r + $\Delta$ r)/r, is given by the equation:

$$(r + \Delta r)/r = \theta /(\theta - 2 \Delta\theta)$$

$$= 1/(1 - 2 \Delta\theta /\theta)$$

$$\doteq 1 + 2 \Delta\theta /\theta \quad (\text{where } 2 \Delta\theta \ll \theta)$$

$$= 1 + \frac{20}{525}$$

Consequently, the diameter D' of the tape guide drum $GD_2$ is selected as

$$D' = D_C \left\{ h^2 + (L \cos \theta_C - 5vt)^2 \right\}^{\frac{1}{2}} \times$$

$$\left\{ h^2 + (L \cos \theta_C - vt)^2 \right\}^{\frac{1}{2}} \times$$

$$\left( 1 + \frac{20}{\text{the number of scanning lines}} \right)$$

where $D_C$ is the diameter of the standard tape guide drum, h is the height of the track, L is the track length, $\theta_C$ is the track angle and vt is the standard tape transport speed.

Thus, the duration during which the rotary magnetic head of the tape guide drum $GD_2$ makes contact with the magnetic tape is made longer by an amount of 10 H for each revolution of the rotary drum. Then, if the amount 10 H is allocated to the front portion and rear portion of the slanting track by an amount of 5 H each, and the recording signal is gated out on the basis thereof, it is possible to obtain a recorded tape having a track pattern applicable to the standard of the SMPTE type C format.

The relationship between the respective vectors of the track pattern, the tape running and the rotation of the drum of the recording and reproducing apparatus embodying the present invention will now be described with reference to Figures 21. In Figure 21, portions corresponding to portions shown in Figure 4 are designated by the same references and will not be described in detail. That is, the track pattern vector is changed from

$$\overrightarrow{QP_1}$$

to

$$\overrightarrow{T_1 T_2} \; ,$$

the tape running vector is changed from

$$\overrightarrow{QP_2}$$

to

$$\overrightarrow{T_1 P_4}$$

and the drum rotation vector is changed from

$$\overrightarrow{P_2 P_1}$$

to

$$\overrightarrow{P_4 P_3}' ,$$

respectively.

In the recording and reproducing apparatus embodying the present invention, in which a colour video signal is obtained from a high speed scanning video camera, the field and line scanning speed of which are respectively N (which is a natural number equal to 2 or more) times the field and line scanning speeds Ssn and Sln of the NTSC system standard television signal, as a component signal and is supplied to memory means, the line scanning speed of N channel video signals read out in parallel to one another from the memory means is made equal to (1 + k/ the number of scanning lines) (where k is a natural number) to provide the component signals of N channels with field and line scanning frequencies of Ssn (1 + k/ the number of scanning lines) and Sln, the N channel component signals are respectively colour-encoded as NTSC signals thereby to provide colour video signals which then are supplied to N rotary magnetic heads, each rotary magnetic head being rotated at the standard speed of revolution, and then they are recorded on a magnetic tape running at a tape speed equal to N times the standard speed to form a slanting track, when N is 4n + 1 or 4n - 1 (where n = 1, 2, 3, ...... ) the value of k and the arrangement of the colour encoder become different. That is, when N = 4n + 1, k is selected to be even and the colour encoder may be an ordinary NTSC system encoder. However, when N = 4n - 1, and if k is selected to be odd, the colour encoder may be an ordinary NTSC system encoder, whereas if k is selected to be even, in order to obtain a colour video signal with colour framing achieved under the condition of being recorded on the tape the NTSC system colour encoder must be modified so as to invert the phase of the carrier chrominance signal of each channel at every other field.

In the recording and reproducing apparatus embodying the present invention, when a colour video signal of the SECAM system is processed, the same colour framing operation as in processing the colour video signal of the NTSC system is required for the colour encoder and, also, k is selected in the same manner as in the NTSC system.

The processing of a colour video signal of the PAL (Phase Alteration Line) system will now be described. When N = 8n + 1 (N = 4n + 1 where n is even) (where n = 1, 2, 3, ...... ), if k is selected to satisfy k = 4t (t = 1, 2, 3, ...... ), the colour encoder may be an ordinary PAL system encoder, while when N = 8n - 3 (N = 4n + 1 where n is odd) (where n = 1, 2, 3, ...... ), if k is selected to satisfy k = 4t + 2, the colour encoder may be an ordinary PAL system encoder. However, when k is selected to satisfy k = 4t, the PAL system colour encoder at the later stage of the D/A converter must be modified so as to allow a colour video signal with colour framing achieved to be produced on the magnetic tape.

Consequently, when N is an odd number equal to 3 or more, the arrangement of the colour encoder is simple. However, if the arrangement of the colour encoder need not be taken into consideration, N may be even.

When the video signal undergoes colour encoding processing before the line scanning speed of the video signal is compressed to (1 + k/the number of scanning lines), k may be an arbitrary natural number.

According to the above-described recording and reproducing apparatus embodying the invention, the video signal obtained from a high speed scanning video camera can be recorded on a magnetic tape so as to be reproduced by the rotary magnetic head at a sufficiently low tape speed without causing any disturbance in the vertical synchronisation and dropping of the picture. In addition, the video signal obtained from the high speed scanning video camera can be recorded on the magnetic tape with the standard recording pattern.

## Claims

1. Apparatus for recording on and reproducing from a magnetic recording tape a high speed video signal obtained from a high speed scanning video camera (1) having a scanning speed which is N times (N is an integer) the scanning speed of a standard video camera that generates a standard television video signal, the apparatus being characterised by:

(a) means for driving the magnetic recording tape to run at a tape speed which is N times that of a standard recording and reproducing apparatus;

(b) means (S₁ etc) for dividing the high speed video signal into N video signals;

(c) means for expanding a time axis of each of the N video signals in the form of a time axis which is compressed with respect to that of the standard television video signal;

(d) means (MD-1 etc) for modulating each of the time axis expanded video signals; and

(e) recording and reproducing means comprising a rotary drum having N rotary magnetic heads (Hₐ etc) mounted on the circumference thereof with an equal angular distance therebetween to record each of the modulated video signals on the magnetic recording tape as successive tracks and a playback head mounted on the circumference thereof at a predetermined position, the diameter of the rotary drum being in a predetermined relationship to that of the drum of the standard magnetic recording and reproducing apparatus.

2. Apparatus according to claim 1, wherein the means for expanding the time axis comprises a time axis expanding circuit for expanding the time axis of the high speed video signal so as to become equal to that of the standard video signal and a time axis compressing circuit (CP-1, etc) for compressing the expanded time axis of the high speed video signal.

3. Apparatus according to claim 2, wherein the time axis compressing circuit (CP-1, etc) is operative to compress the high speed video signal, the time axis of which is expanded to be the same as that of said standard television signal, to

$$(1 + \frac{k}{S_L}),$$

where k is a natural number and $S_L$ is the number of scanning lines.

4. Apparatus according to claim 1, wherein the diameter of the rotary drum is given by

$$D = \frac{\sqrt{h^2 + (L \cos \theta_c - Nvt)^2}}{\sqrt{h^2 + (L \cos \theta_c - vt)^2}} \times \left(1 + \frac{k}{S_L}\right) \times D_C$$

where

D = the diameter of the rotary drum,
k = a natural number,
$S_L$ = the number of scanning lines,
h = the length of a video track in a width direction of the tape,
L = the video track length of the standard magnetic recording and reproducing apparatus,
$\theta_c$ = the video track angle,
$D_C$ = a diameter of a drum of the standard magnetic recording and reproducing apparatus, and
vt = the tape speed of the standard magnetic recording and reproducing apparatus.

## Revendications

1. Appareil pour enregistrer sur une bande magnétique et reproduire à partir de celle-ci un signal vidéo rapide obtenu à partir d'une caméra vidéo à balayage rapide (1), ayant une vitesse de balayage qui est égale à N fois (N est un entier) la vitesse de balayage d'une caméra vidéo normale qui produit un signal vidéo de télévision normal, l'appareil étant caractérisé par :

(a) des moyens pour entraîner la bande d'enregistrement magnétique de façon à la faire défiler avec une vitesse de bande qui est égale à N fois celle d'un appareil d'enregistrement et de reproduction normal;

(b) des moyens (S₁, etc.) pour diviser le signal vidéo rapide en N signaux vidéo;

(c) des moyens pour effectuer une extension de l'axe de temps de chacun des N signaux vidéo, pour donner un axe de temps qui est comprimé par rapport à celui du signal vidéo de télévision normal;

(d) des moyens (MD-1, etc.) pour moduler chacun des signaux vidéo ayant subi une extension de l'axe de temps; et

(e) des moyens d'enregistrement et de reproduction comprenant un tambour tournant sur la circonférence duquel sont montées N têtes magnétiques tournantes (H_A), avec une distance angulaire égale entre elles, pour enregistrer chacun des signaux vidéo modulés, sous la forme de pistes successives sur la bande d'enregistrement magnétique, et une tête de reproduction montée à la circonférence du tambour dans une position prédéterminée, le diamètre du tambour tournant

20

présentant une relation prédéterminée par rapport à celui du tambour de l'appareil d'enregistrement et de reproduction magnétiques normal.

2. Appareil selon la revendication 1, dans lequel les moyens destinés à effectuer l'extension de l'axe de temps comprennent un circuit d'extension d'axe de temps destiné à étendre l'axe de temps du signal vidéo rapide, de façon qu'il devienne égal à celui du signal vidéo normal, et un circuit de compression d'axe de temps (CP-1, etc.) destiné à comprimer l'axe de temps étendu du signal vidéo rapide.

3. Appareil selon la revendication 2, dans lequel le circuit de compression d'axe de temps (CP-1, etc.) comprime par le facteur

$$\left( 1 + \frac{k}{S_L} \right)$$

le signal vidéo rapide dont l'axe de temps a été étendu de façon à être identique à celui du signal de télévision normal, en désignant par k un nombre naturel et par $S_L$ le nombre de lignes de balayage.

4. Appareil selon la revendication 1, dans lequel le diamètre du tambour tournant est donné par

$$D = \sqrt{h^2 + (L \cos \theta_C - Nvt)^2} \ \times \ \sqrt{h^2 + (L \cos \theta_C - vt)^2}$$

$$\times \left( 1 + \frac{k}{S_L} \right) \times D_C$$

avec les notations suivantes :

$D$ = diamètre du tambour tournant,
$k$ = nombre naturel,
$S_L$ = nombre de lignes de balayage,
$h$ = longueur d'une piste vidéo dans la direction de la largeur de la bande,
$L$ = longueur d'une piste vidéo de l'appareil d'enregistrement et de reproduction magnétiques normal,
$\theta_c$ = angle d'une piste vidéo,
$D_C$ = diamètre d'un tambour de l'appareil d'enregistrement et de reproduction magnétiques normal, et
$vt$ = vitesse de la bande dans l'appareil d'enregistrement et de reproduction magnétiques normal.

## Ansprüche

1. Vorrichtung zum Aufzeichnen und Wiedergeben eines Hochgeschwindigkeits-Videosignals auf ein und von einem magnetischen Aufzeichnungsband, wobei das Hochgeschwindigkeits-Videosignal von einer Videokamera (1) mit einer erhöhten, N-mal (N ist eine ganze Zahl) größeren Abtastgeschwindigkeit als die Abtastgeschwindigkeit einer ein Standard-Fernsehvideosignal erzeugenden Standard-Videokamera erhalten ist,
**gekennzeichnet durch**
(a) eine Einrichtung zum Betreiben des magnetischen Aufzeichnungsbandes mit einer N-mal größeren Bandgeschwindigkeit als bei einer magnetischen Standard-Aufzeichnungs- und -Wiedergabevorrichtung,
(b) eine Einrichtung (S₁ usw.) zum Aufteilen des Hochgeschwindigkeits-Videosignals in N Videosignale,
(c) eine Einrichtung zum Expandieren einer Zeitachse jedes der N Videosignale in Form einer Zeitachse, die in Bezug jener des Standard-Fernsehvideosignals komprimiert ist,
(d) eine Einrichtung (MD-1 usw.) zum Modulieren jedes zeitachsenexpandierten Videosignals und
(e) eine Aufzeichnungs- und Wiedergabeeinrichtung mit einer Drehtrommel mit N auf deren Umfang

21

im gleichen Winkelabstand voneinander befestigten Drehmagnetköpfen (H$_A$ usw.) zum Aufzeichnen jedes modulierten Videosignals auf dem magnetischen Aufzeichnungsband als aufeinanderfolgende Spuren und mit einem auf dem Umfang einer vorbestimmten Stelle befestigten Wiedergabekopf, wobei der Durchmesser der Drehtrommel in einem vorbestimmten Verhältnis zur Trommel der magnetischen Standard-Aufzeichnungs-und Wiedergabevorrichtung steht.

2. Vorrichtung nach Anspruch 1, wobei die Einrichtung zum Expandieren der Zeitachse einen Zeitachsenexpandierungsschaltkreis zum Expandieren der Zeitachse des Hochgeschwindigkeits-Videosignals, derart, daß sie gleich jener des Standard-Videosignals ist, und einen Zeitachsen-Kompressionsschaltkreis (CP-1 usw.) zum Komprimieren der expandierten Zeitachse des Hochgeschwindigkeits-Videosignals aufweist.

3. Vorrichtung nach Anspruch 2, wobei der Zeitachsen-Kompressionsschaltkreis (CP-1 usw.) das Hochgeschwindigkeits-Videosignal, dessen Zeitachse so expandiert ist, daß sie gleich jener des Standard-Fernsehvideosignals ist, auf $I + k/S_L$ expandiert, wobei k eine natürliche Zahl und $S_L$ die Zahl der Abtastzeilen ist.

4. Vorrichtung nach Anspruch 1, wobei der Durchmesser der Drehtrommel durch

$$D = \frac{\sqrt{h^2 + (L \cos \theta_c - Nvt)^2}}{\sqrt{h^2 + (L \cos \theta_c - vt)^2}} \times \left(1 + \frac{k}{S_L}\right) \times D_C$$

gegeben ist und

D          den Durchmesser der Drehtrommel,
k          eine natürliche Zahl,
$S_L$          die Zahl der Abtastzeilen,
h          die Länge einer Videospur in einer Breitenrichtung des Bandes,
L          die Videospurlänge der magnetischen Standard-Aufzeichnungs- und Wiedergabevorrichtung,
$\theta_c$          den Videospurwinkel,
$D_C$          einen Durchmesser einer Trommel der magnetischen Standard-Aufzeichnungs-und Wiedergabevorrichtung und
vt          die Bandgeschwindigkeit des magnetischen Standard-Aufzeichnungs-und Wiedergabegeräts

bedeuten.

*FIG. 1*

S1  5  a c
S2  M-1
S3  M-2  b S11  DA-1  VID-1  MD-1  A1  HA
S4  M-3  a c
S5  M-4  b S12  DA-2  VID-2  MD-2  A2  HB
S6  M-5  a c
S7  M-6  b S13  DA-3  VID-3  MD-3  A3  HC
S8  M-7  a c
S9  M-8  b S14  DA-4  VID-4  MD-4  A4  HD
S10  M-9  a c
M-10  b S15  DA-5  VID-5  MD-5  A5  HE

1  2  3  4

5  6

EP 0 130 667 B1

# FIG. 2

EP 0 130 667 B1

FIG. 3A

FIG. 3B

*FIG. 4*

*FIG. 5*

FIG. 6

FIG. 7

EP 0 130 667 B1

# FIG. 8

| | T1 | T2 | T3 | T4 | T5 | T6 | T7 | T8 | T9 | T10 | T·11 | T12 | T13 | T14 | T15 | T16 | T17 | T18 |
|---|---|---|---|---|---|---|---|---|---|---|---|---|---|---|---|---|---|---|

M—1  W1N  R1N(VID-1)  W1(N+1)  R1(N+1)(VID-2)  W1(N+2)  R1(N+2)(VID-3)

M—2  W2N  R2N(VID-2)  W2(N+1)  R2(N+1)(VID-3)  W2(N+2)  R2(N+2)(VID-4)

M—3  W3N  R3N(VID-3)  W3(N+1)  R3(N+1)(VID-4)  W3(N+2)  R3(N+2)(VID-5)

M—4  W4N  R4N(VID-4)  W4(N+1)  RR4(N+1)(VID-5)

M—5  W5N  R5N(VID-5)  W5(N+1)  R5(N+1)(VID-1)

M—6  W6N  R6N(VID-1)  W6(N+1)  R6(N+1)(VID-2)

## FIG. 9A

## FIG. 9B

F I G. 10

*F I G. 11*

EP 0 130 667 B1

EP 0 130 667 B1

FIG. 12

FIG. 13

EP 0 130 667 B1

## F I G. 14

## F I G. 17

FIG. 15

FIG. 16

EP 0 130 667 B1

FIG. 18

F I G. 19

FIG. 20

FIG. 21

EP 0 130 667 B1